# EUROPEAN PATENT APPLICATION

(11) **EP 4 576 040 A1**
(43) Date of publication of application: **25.06.2025**
(21) Application number: 24188562.3
(22) Date of filing: 15.07.2024
(51) Int. Cl.: G08G 1/04, G06V 20/58, G08G 1/16

(54) **OBJECT DETECTION IN DARKNESS DURING VEHICLE OPERATION**

(30) Priority: 18.12.2023 US 202318543418
(71) Applicant: Volvo Car Corporation, 405 31 Göteborg (SE)
(72) Inventor: Perez Barrera, Oswaldo, SE-405 31 Göteborg (SE); Lennartsson, Anders, SE-405 31 Göteborg (SE)
(74) Representative: Nederlandsch Octrooibureau

(57) **Abstract**

Systems/techniques that facilitate object detection in darkness during vehicle operation are provided. In various embodiments, a system can detect one or more objects on or alongside a road. In various aspects, the system can detect light from an approaching vehicle to determine an illuminated area, and determine if the one or more objects are located in the illuminated area. In various instances, the system can perform, in response to a determination that the one or more objects are not located in the illuminated area, a risk assessment on the one or more objects based on parameters of the one or more objects. Based on a risk level determined by the risk assessment, the system can transmit notifications to the approaching vehicle and execute various safety actions.

## Description

### TECHNICAL FIELD

The subject disclosure relates generally to object detection in darkness during vehicle operation.

### BACKGROUND

There is a need in the art to mitigate or overcome some of the shortcomings of object detection in darkness during vehicle operation.

### SUMMARY

The following presents a summary to provide a basic understanding of one or more embodiments of the invention. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, devices, systems, computer-implemented methods, apparatus or computer program products that facilitate object detection in darkness for vehicle operation.

According to an embodiment, a system, comprises a processor that executes computer-executable components stored in a non-transitory computer-readable memory, the computer-executable components comprising: an identification component that detects one or more objects on or alongside a road; a recognition component that detects light from an approaching vehicle to determine an illuminated area, and determines if the one or more objects are located in the illuminated area; and an analysis component that performs, in response to a determination that the one or more objects are not located in the illuminated area, a risk assessment on the one or more objects based on parameters of the one or more objects.

According to an embodiment, computer-implemented method, comprises: detecting one or more objects on or alongside a road; detecting light from an approaching vehicle to determine an illuminated area, and determining if the one or more objects are located in the illuminated area; and performing, in response to a determination that the one or more objects are not located in the illuminated area, a risk assessment on the one or more objects based on parameters of the one or more objects.

According to yet another embodiment, a computer program product comprises a non-transitory computer-readable memory having program instructions embodied therewith, the program instructions executable by a processor to cause the processor to: detect one or more objects on or alongside a road; detect light from an approaching vehicle to determine an illuminated area, and determine if the one or more objects are located in the illuminated area; and perform, in response to a determination that the one or more objects are not located in the illuminated area, a risk assessment on the one or more objects based on parameters of the one or more objects.

According to one or more embodiments, the above-described systems can be implemented as computer-implemented methods or computer program products.

### DESCRIPTION OF THE DRAWINGS

FIG. 1 illustrates a block diagram of an example, non-limiting system that facilitates object detection in darkness for vehicle operation in accordance with one or more embodiments described herein.
FIG. 2 illustrates a block diagram of an example, non-limiting system that facilitates object detection in darkness for vehicle operation in accordance with one or more embodiments described herein.
FIG. 3 illustrates a block diagram of an example, non-limiting system that facilitates object detection in darkness for vehicle operation in accordance with one or more embodiments described herein.
FIG. 4 illustrates an example, non-limiting diagram of tunnel detection and determination of external light conditions in accordance with one or more embodiments described herein.
FIG. 5 illustrates an example, non-limiting light pollution map for risk assessment in accordance with one or more embodiments described herein.
FIG. 6 illustrates an example, non-limiting depiction of object detection by a vehicle in accordance with one or more embodiments described herein.
FIG. 7 illustrates an example, non-limiting depiction of vehicle detection by a vehicle in accordance with one or more embodiments described herein.
FIG. 8 illustrates an example, non-limiting depiction of vehicle light identification in accordance with one or more embodiments described herein.
FIG. 9 illustrates an example, non-limiting depiction of vehicle light identification in accordance with one or more embodiments described herein.
FIG. 10 illustrates an example, non-limiting depiction of object and vehicle light detection by a vehicle in accordance with one or more embodiments described herein.
FIG. 11 illustrates an example, non-limiting depiction of object and vehicle light detection by a vehicle in accordance with one or more embodiments described herein.
FIG. 12 illustrates an example, non-limiting depiction of object and vehicle light detection by a vehicle in accordance with one or more embodiments described herein.
FIG. 13 illustrates an example, non-limiting depiction of object detection by a vehicle in accordance with one or more embodiments described herein.
FIG. 14 illustrates an example, non-limiting depiction of object and vehicle light detection by a vehicle in accordance with one or more embodiments described herein.
FIG. 15 illustrates an example, non-limiting depiction of brightness levels of an illumination area for risk assessment in accordance with one or more embodiments described herein.
FIG. 16 illustrates an example, non-limiting diagram of risk assessment parameters in accordance with one or more embodiments described herein.
FIG. 17 illustrates an example, non-limiting depiction of other light source detection by a vehicle in accordance with one or more embodiments described herein.
FIG. 18 illustrates an example, non-limiting depiction of other light source detection and object identification by a vehicle in accordance with one or more embodiments described herein.
FIG. 19 illustrates an example, non-limiting depiction of other light source detection and object identification by a vehicle in accordance with one or more embodiments described herein.
FIG. 20 illustrates an example, non-limiting diagram of risk assessment of detected objects in accordance with one or more embodiments described herein.
FIG. 21 illustrates an example, non-limiting depiction of vehicle communication for object detection in accordance with one or more embodiments described herein.
FIG. 22 illustrates an example, non-limiting depiction of vehicle notifications of detected objects in accordance with one or more embodiments described herein.
FIG. 23 illustrates an example, non-limiting depiction of object and vehicle light detection by a vehicle for risk assessment in accordance with one or more embodiments described herein.
FIG. 24 illustrates an example, non-limiting depiction of dynamic bend lighting for object detection by a vehicle in accordance with one or more embodiments described herein.
FIG. 25 illustrates an example, non-limiting depiction of notifying vehicles within a vicinity of detected objects in accordance with one or more embodiments described herein.
FIG. 26 illustrates an example, non-limiting depiction of tunnel illumination detection and tunnel entrance or exit identification in accordance with one or more embodiments described herein.
FIG. 27 illustrates an example, non-limiting depiction of tunnel exit identification in accordance with one or more embodiments described herein.
FIG. 28 illustrates an example, non-limiting depiction of object detection in a tunnel in accordance with one or more embodiments described herein.
FIG. 29 illustrates an example, non-limiting depiction of light detection in a tunnel in accordance with one or more embodiments described herein.
FIG. 30 illustrates a flow diagram of an example, non-limiting computer-implemented method that facilitates object detection in darkness during vehicle operation in accordance with one or more embodiments described herein.
FIG. 31 illustrates a block diagram of an example, non-limiting operating environment in which one or more embodiments described herein can be facilitated.
FIG. 32 illustrates an example networking environment operable to execute various implementations described herein.

### DETAILED DESCRIPTION

The following detailed description is merely illustrative and is not intended to limit embodiments or application/uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

Object detection while driving a vehicle plays a crucial role in enhancing road safety by identifying and tracking various objects such as vehicles, pedestrians, and obstacles in the vehicle's vicinity. Object detection, often implemented through sensors and cameras, enables real-time analysis of the surroundings of the vehicle, providing essential data for driver assistance systems, collision avoidance, and overall improved situational awareness. Thus, object detection can reduce the risk of collisions and improve overall visibility in challenging low-light conditions (e.g., at night, in a poorly lit tunnel).

Unfortunately, existing techniques for object detection in darkness or environments of low illumination can be unreliable for various reasons.

First, existing object detection systems rely on ambient light at night, such as moonlight or street lighting. In areas with poor lighting conditions, these systems may struggle to effectively and accurately detect objects near or on a road that can cause potential hazardous situations (e.g., a child running onto a road, a large traffic cone in the road). Traditional headlights provide limited illumination in the dark, and their range is often insufficient for detecting objects at a distance in the dark or during the nighttime. Furthermore, the focused beam of headlights may create shadows, making it difficult to identify objects that are partially obscured. Furthermore, many vehicles use sensors for object detection. However, these sensors may have a limited detection range and may not be able to identify objects at a sufficient distance, especially in complete darkness. Identifying wildlife in the dark also remains a challenge, as the lack of ambient light and the variability in animal movements make it difficult for existing systems to reliably detect and classify animals.

Second, accidents in dark environments occur not only due to animals, but human error as well. When driving in dark environments, drivers have limited visibility. For example, there can be a vehicle driving on a highway at a high speed and in a dark environment. Furthermore, there can be a stopped vehicle in the lane, but it may not be visible to the driver until it is too late to either avoid the stopped vehicle or stop the car, therefore causing the two vehicles to collide. Under insufficient light conditions, it is challenging for the driver to spot objects at far distances or on the sides of the road. The farther an object is, the darker the environment gets as light loses intensity. For example, a driver cannot see a deer running towards the road because of the darkness (e.g., due to lack of street lighting). It is not until the deer is in front of the vehicle that the driver can spot the animal. Moreover, at high speeds, the chances of avoiding such an accident are considerably low.

Third, some modern vehicles (e.g., autonomous vehicles) are equipped with advanced sensors and technologies that enable more accurate and reliable object detection. However, a majority of vehicles still lack these features and sensors, and therefore, accidents in dark environments can still occur. Advanced technologies like thermal imaging and high-performance lidar can improve object detection in the dark, but they are often expensive, and thus limiting their widespread adoption in vehicles.

Accordingly, systems or techniques that can address one or more of these technical problems can be desirable.

Various embodiments described herein can address one or more of these technical problems. One or more embodiments described herein can include systems, computer-implemented methods, apparatus, or computer program products that can facilitate object detection in darkness for vehicle operation. That is, the present inventors realized that various disadvantages are associated with existing techniques for performing object detection in darkness.

In various embodiments, an identification component can detect one or more objects on or alongside a road. In various instances, the identification component can engage sensors on a vehicle to detect objects (e.g., animals, pedestrians, bikers) In various aspects, a recognition component can detect light from an approaching vehicle to determine an illuminated area, and determine if the one or more objects are located in the illuminated area. For example, the recognition component can determine if an identified deer near a road is within the detected light from the approaching vehicle (e.g., is visible to the approaching vehicle). In various embodiments, an analysis component can perform, in response to a determination that the one or more objects are not located in the illuminated area, a risk assessment on the one or more objects based on parameters of the one or more objects. For example, if the identified deer is not within the detected light from the approaching vehicle, the analysis component can perform a risk assessment to determine a risk level associated with the identified deer (e.g., poses higher risk if deer is running towards the road, poses less risk is deer is standing farther from the road). Thus, in various instances, an execution component can notify the approaching vehicle of the detected object or perform actions that can enable the detected object to be visible to the approaching vehicle (e.g., change light intensity on the approaching vehicle, change headlight angles of the approaching vehicle). Thus, vehicles equipped with appropriate sensors to perform object detection in dark environments can enable other vehicles not equipped with such technology to obtain enhanced visibility and awareness.

It should be appreciated that the herein figures and description provide non-limiting examples of various embodiments and are not necessarily drawn to scale.

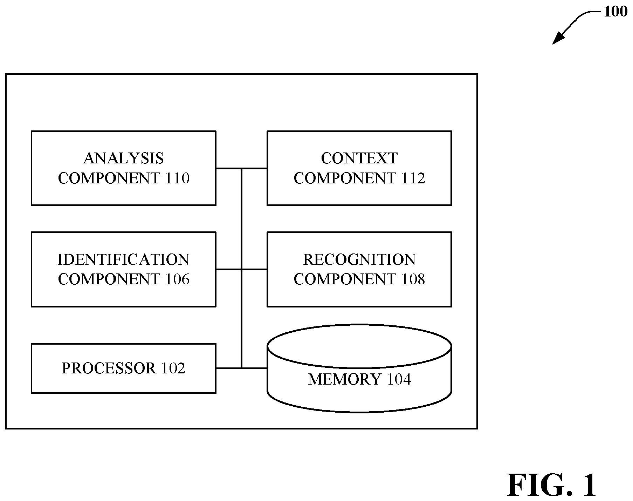

FIG. 1 illustrates an example, non-limiting block diagram 100 showing a vehicle system, where such vehicle can facilitate object detection in darkness for vehicle operation in accordance with one or more embodiments described herein.

In various aspects, the vehicle can be any suitable vehicle or automobile (e.g., can be a car, a truck, a van, a motorcycle, plane, boat, helicopter). In various instances, the vehicle can have or otherwise exhibit any suitable type of propulsion system (e.g., can be an electric vehicle, can be a gasoline-powered or diesel-powered vehicle, can be a hybrid vehicle). In some cases, the vehicle can be driving on any suitable road, street, lane, or highway at any suitable speed. In other cases, the vehicle can, while driving, be stopped at an intersection, at a traffic light, at a stop sign, at a cross-walk, or at a traffic jam. In yet other cases, the vehicle can be parked rather than driving (e.g., can be parked in a parking lot, by a curb, or in a driveway). In any case, the vehicle can comprise, have, or otherwise be outfitted or equipped with the system 100. In other words, the system 100 can be onboard the vehicle.

In various embodiments, the system 100 can comprise a processor 102 (e.g., computer processing unit, microprocessor) and a non-transitory computer-readable memory 104 that is operably or operatively or communicatively connected or coupled to the processor 102. The non-transitory computer-readable memory 104 can store computer-executable instructions which, upon execution by the processor 102, can cause the processor 102 or other components of the system 100 (e.g., identification component 106, recognition component 108, analysis component 110, context component 112) to perform one or more acts. In various embodiments, the non-transitory computer-readable memory 104 can store computer-executable components (e.g., identification component 106, recognition component 108, analysis component 110, context component 112), and the processor 102 can execute the computer-executable components.

In various embodiments, the system 100 can comprise an identification component 106. In various aspects, as described herein, the identification component 106 can detect one or more objects on or alongside a road (e.g., a child walking towards the road, a construction cone in the middle of a lane, wildlife near the road).

In various embodiments, the system 100 can comprise a recognition component 108. In various instances, as described herein, the recognition component 108 can detect light from an approaching vehicle to determine an illuminated area, and determine if the one or more objects are located in the illuminated area. For example, the recognition component 108 can determine if a pedestrian near a road is located within the illuminated area caused by the headlights of an approaching vehicle. In other words, the recognition component 108 can determine if the one or more detected objects are visible to the driver of the approaching vehicle. In various aspects, the approaching vehicle can be any vehicle approaching from a different direction or any vehicle from which the headlights are visible (e.g., a vehicle turning onto the road, a vehicle driving in the opposite lane).

In various embodiments, the recognition component 108 can detect the illuminated area from an approaching vehicle using computer vision algorithms. The computer vision algorithms the recognition component 108 can use, but are not limited to, are histogram analysis, thresholding, or color conversion of images (e.g., conversion to grayscale, conversion to black and white).

In various aspects, the recognition component 108 can employ a timer condition to determine if the one or more objects are located within the illuminated area. More specifically, if a detected object is located within the illuminated area but moves out of the illuminated area before a defined short period of time, the recognition component 108 can ultimately determine that the detected object is not in the illuminated area. If the detected object is located outside the illuminated area but moves into the illuminated area after the defined short period of time, the recognition component 108 can ultimately determine that the detected object is located in the illuminated area. Conversely, if the detected object remains in the illuminated area or remains outside the illuminated area for a time longer than the defined short period of time, the recognition component 108 can assume with higher certainty that the object has been detected. In various instances, the timer condition can enforce assurance that an object has been detected.

In various embodiments, the system 100 can comprise an analysis component 110. In various cases, as described herein, the analysis component 110 can perform , in response to a determination that the one or more objects are not located in the illuminated area (e.g., are not visible to the approaching vehicle), a risk assessment on the one or more objects based on parameters of the one or more objects. More specifically, the analysis component 110 can employ information about the detected one or more objects (e.g., movement, type of object, capability of moving, location) to determine a risk level (e.g., non-risky, risky, very risky) assigned to the one or more objects.

In various embodiments, the system 100 can comprise a context component 112. In various cases, as described herein, the context component 112 can determine if external light conditions meet a defined threshold for darkness. More specifically, the context component 112 can determine if the external light conditions lack sufficient illumination such that approaching vehicles may not see objects on a road that can cause hazards (e.g., too dark to see a deer near the road). Thus, the identification component 106 can automatically start to detect objects based on a determination that external light conditions meet a defined threshold for darkness. For example, the identification component 106 can be refrain from object detection if a vehicle is driving in daylight, as approaching vehicles are capable of seeing objects on or alongside a road. As another example, if a vehicle enters a tunnel that is dimly lit, the context component 112 can determine that light conditions meet the defined threshold for darkness, and therefore the identification component 106 can begin to perform object detection in response to the determination.

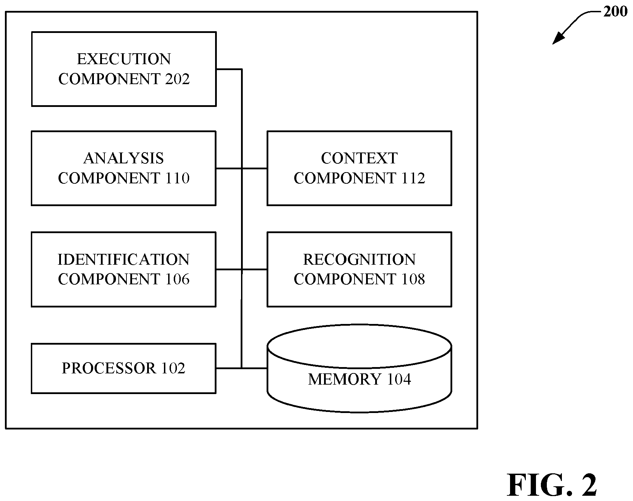

FIG. 2 illustrates a block diagram of an example, non-limiting system 200 that can facilitate object detection in darkness for vehicle operation in accordance with one or more embodiments described herein. As shown, the system 200 can, in some cases, comprise the same components as the system 100, and can further comprise an execution component 202.

In various embodiments, the execution component 202 can conduct, initiate, facilitate, or otherwise perform any suitable electronic actions, in response to the analysis component 110 (e.g., in response to a determination of a risk level of one or more detected objects). In contrast, the execution component 202 can, in various instances, refrain from conducting, initiating, facilitating, or otherwise performing such electronic actions, in response to the analysis component 110.

In various embodiments, the execution component 202 can, in response to a determination that the one or more objects are risky or very risky (e.g., wildlife running into the road, a biker riding into the road), display an electronic notification to the driver of the approaching vehicle on any type of vehicle display (e.g., dashboard display, head-up display). The electronic notification can comprise any corresponding warning message. For example, if the identification component 106 detects an inattentive pedestrian walking across the street, the recognition component 108 can determine an illuminated area from a detected approaching vehicle, and can further determine that the pedestrian is not in the illuminated area. Thus, in response to the determination that the pedestrian is not in the illuminated area, the analysis component 110 can perform a risk assessment to determine that the pedestrian is very risky due to the type of object and movement direction. Therefore, the execution component 202 can, for example, instruct the driver of the approaching vehicle to slow down and increase intensity of the headlights.

Furthermore, the execution component 202 can, in response to a determination that the one or more objects are risky or very risky, modify driving of the vehicle or the approaching vehicle. For example, the execution component 202 can perform a lane change, slow down, or speed up the vehicle to avoid a potential accident (e.g., avoid collision with the object, avoid collision with the approaching vehicle if the approaching vehicle collides with the object). Furthermore, the execution component 202 can, if equipped with dynamic bend lighting, illuminate the object by turning the angle of the headlights towards the object, thus enabling the approaching vehicle to see the object. Moreover, the execution component 202 can also increase intensity of the lights on the vehicle to illuminate the object and allow the approaching vehicle to see the object.

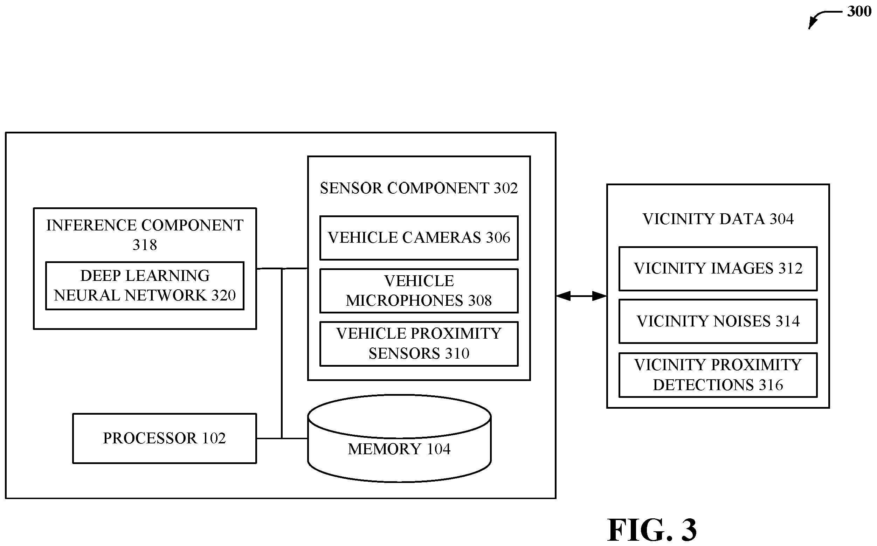

FIG. 3 illustrates a block diagram of an example, non-limiting system 300 that can facilitate object detection in darkness for vehicle operation in accordance with one or more embodiments described herein. The system 300 can, in some cases, comprise the same components as the system 200, and can further comprise a sensor component 302, an inference component 318, and a deep learning neural network 320.

In various aspects, as described herein, the sensor component 302 can obtain, via any suitable sensors of the vehicle, vicinity data 304. In various cases, the vicinity data 304 can exhibit any suitable format, size, or dimensionality. For example, the vicinity data 304 can comprise one or more scalars, one or more vectors, one or more matrices, one or more tensors, one or more character strings, or any suitable combination thereof.

In various embodiments, the sensor component 302 can electronically control, electronically execute, electronically activate, or otherwise electronically access any suitable sensors of the vehicle. In various aspects, such sensors can be external or road-facing. In other words, such sensors can be oriented or otherwise configured to monitor the vicinity (e.g., the surroundings of the vehicle) as the vehicle drives around or is parked.

As a non-limiting example, such sensors can include a set of vehicle cameras 306. In various aspects, the set of vehicle cameras 306 can include any suitable number of any suitable types of cameras (e.g., of image-capture devices). In various instances, the set of vehicle cameras 306 can be integrated into or onto the vehicle. In various cases, one or more of the set of vehicle cameras 306 can be forward-facing. For example, such one or more cameras can be integrated into or onto any suitable forward-facing surfaces, whether interior or exterior, of the vehicle (e.g., can be built on a dash of the vehicle so as to look through a front windshield of the vehicle, can be built around the front windshield of the vehicle, can be built into a front bumper of the vehicle, can be built around headlights of the vehicle, can be built into a hood of the vehicle). Because such one or more cameras can be forward-facing, such one or more cameras can be configured to capture or otherwise record images or video frames of portions of the vicinity that lie in front of the vehicle. In various aspects, one or more of the set of vehicle cameras 306 can be rearward-facing. For example, such one or more cameras can be integrated into or onto any suitable rearward-facing surfaces, whether interior or exterior, of the vehicle (e.g., can be built into or on a rearview mirror of the vehicle, can be built into or onto sideview mirrors of the vehicle, can be built around a rear windshield of the vehicle, can be built into a rear bumper of the vehicle, can be built around taillights of the vehicle, can be built into a trunk-cover of the vehicle). Because such one or more cameras can be rearward-facing, such one or more cameras can be configured to capture or otherwise record images or video frames of portions of the vicinity that lie behind the vehicle. In various instances, one or more of the set of vehicle cameras 306 can be laterally-facing. For example, such one or more cameras can be integrated into or onto any suitable lateral surfaces, whether interior or exterior, of the vehicle (e.g., can be built into or around doors or door handles of the vehicle, can be built into or around fenders of the vehicle). Because such one or more cameras can be laterally-facing, such one or more cameras can be configured to capture or otherwise record images or video frames of portions of the vicinity that lie beside the vehicle.

As another non-limiting example, such sensors can include a set of vehicle microphones 308. In various aspects, the set of vehicle microphones 308 can include any suitable number of any suitable types of microphones (e.g., of sound-capture devices). In various instances, the set of vehicle microphones 308 can be integrated into or onto the vehicle. In various cases, one or more of the set of vehicle microphones 308 can be forward-facing. For example, such one or more microphones can be integrated into or onto any suitable forward-facing surfaces, whether interior or exterior, of the vehicle, so as to capture or otherwise record sounds or noises that occur in portions of the vicinity that lie in front of the vehicle. In various aspects, one or more of the set of vehicle microphones 308 can be rearward-facing. For example, such one or more microphones can be integrated into or onto any suitable rearward-facing surfaces, whether interior or exterior, of the vehicle, so as to capture or otherwise record sounds or noises that occur in portions of the vicinity that lie behind the vehicle. In various instances, one or more of the set of vehicle microphones 308 can be laterally-facing. For example, such one or more microphones can be integrated into or onto any suitable lateral surfaces, whether interior or exterior, of the vehicle, so as to capture or otherwise record sounds or noises that occur in portions of the vicinity that lie beside the vehicle.

As still another non-limiting example, such sensors can include a set of vehicle proximity sensors 310. In various aspects, the set of vehicle proximity sensors 310 can include any suitable number of any suitable types of proximity sensors (e.g., of radar, ultrasound, laser, sonar, or lidar sensors). Therefore, sensors such as radar or lidar sensors can enable object detection even if the objects are not visible (e.g., can detect objects in environments lacking sufficient lighting conditions). In various instances, the set of vehicle proximity sensors 310 can be integrated into or onto the vehicle. In various cases, one or more of the set of vehicle proximity sensors 310 can be forward-facing. For example, such one or more proximity sensors can be integrated into or onto any suitable forward-facing surfaces, whether interior or exterior, of the vehicle, so as to capture or otherwise record proximities of tangible objects located in portions of the vicinity that lie in front of the vehicle. In various aspects, one or more of the set of vehicle proximity sensors 310 can be rearward-facing. For example, such one or more proximity sensors can be integrated into or onto any suitable rearward-facing surfaces, whether interior or exterior, of the vehicle, so as to capture or otherwise record proximities of tangible objects located in portions of the vicinity that lie behind the vehicle. In various instances, one or more of the set of vehicle proximity sensors 310 can be laterally-facing. For example, such one or more proximity sensors can be integrated into or onto any suitable lateral surfaces, whether interior or exterior, of the vehicle, so as to capture or otherwise record proximities of tangible objects located in portions of the vicinity that lie beside the vehicle.

In any case, the sensor component 302 can utilize such sensors to capture, record, or otherwise measure the vicinity data 304.

For example, the set of vehicle cameras 306 can capture a set of vicinity images 312 while the vehicle is driving or parked. In various aspects, the set of vicinity images 312 can include any suitable number of images or video frames (e.g., any suitable number of two-dimensional pixel arrays) that can depict portions of the vicinity (e.g., portions of the vicinity that lie in front of, behind, or beside the vehicle).

As another example, the set of vehicle microphones 308 can capture a set of vicinity noises 314 while the vehicle is driving or parked. In various instances, the set of vicinity noises 314 can include any suitable number of audio clips that can represent noises occurring in portions of the vicinity (e.g., in portions of the vicinity that lie in front of, behind, or beside the vehicle).

As yet another example, the set of vehicle proximity sensors 310 can capture a set of vicinity proximity detections 316 while the vehicle is driving or parked. In various aspects, the set of vicinity proximity detections 316 can include any suitable number of proximity detections (e.g., of radar, sonar, or lidar detections) that can represent distances between the vehicle and nearby objects located in portions of the vicinity (e.g., in portions of the vicinity that lie in front of, behind, or beside the vehicle).

In any case, the set of vicinity images 312, the set of vicinity noises 314, and the set of vicinity proximity detections 316 can collectively be considered as the vicinity data 304.

In various embodiments, the system 500 can comprise an inference component 318. In various instances, as described herein, the inference component 318 can detect one or more objects or vehicles that occur within the vicinity, based on the vicinity data 304.

In various embodiments, the inference component 318 can electronically store, electronically maintain, electronically control, or otherwise electronically access the deep learning neural network 320. In various aspects, the deep learning neural network 320 can have or otherwise exhibit any suitable internal architecture. For instance, the deep learning neural network 320 can have an input layer, one or more hidden layers, and an output layer. In various instances, any of such layers can be coupled together by any suitable interneuron connections or interlayer connections, such as forward connections, skip connections, or recurrent connections. Furthermore, in various cases, any of such layers can be any suitable types of neural network layers having any suitable learnable or trainable internal parameters. For example, any of such input layer, one or more hidden layers, or output layer can be convolutional layers, whose learnable or trainable parameters can be convolutional kernels. As another example, any of such input layer, one or more hidden layers, or output layer can be dense layers, whose learnable or trainable parameters can be weight matrices or bias values. As still another example, any of such input layer, one or more hidden layers, or output layer can be batch normalization layers, whose learnable or trainable parameters can be shift factors or scale factors. Further still, in various cases, any of such layers can be any suitable types of neural network layers having any suitable fixed or non-trainable internal parameters. For example, any of such input layer, one or more hidden layers, or output layer can be non-linearity layers, padding layers, pooling layers, or concatenation layers.

No matter the internal architecture of the deep learning neural network 320, the deep learning neural network 320 can be configured to detect surrounding objects or vehicles based on inputted vicinity data.

In various instances, the inference component 318 can, in various aspects, execute the deep learning neural network 320 on the vicinity data 304, and such execution can cause the deep learning neural network 320 to detect one or more objects or vehicles in the vicinity. More specifically, the inference component 318 can feed the vicinity data 304 (e.g., the set of vicinity images 312, the set of vicinity noises 314, or the set of vicinity proximity detections 316) to an input layer of the deep learning neural network 320. In various instances, the vicinity data 304 (e.g., the set of vicinity images 312, the set of vicinity noises 314, or the set of vicinity proximity detections 316) can complete a forward pass through one or more hidden layers of the deep learning neural network 320. In various cases, an output layer of the deep learning neural network 320 can detect one or more objects or vehicles based on activation maps or intermediate features produced by the one or more hidden layers.

In various embodiments, the inference component 318 can execute the deep learning neural network 320 on the vicinity data 304 to detect objects on or alongside a road. Furthermore, the deep learning neural network 320 can be executed to detect surface road conditions (e.g., ice on a road, wet roads from rainfall, presence of snow) that can be used to determine a risk level of a detected object. For instance, the sensor component 302 can capture the vicinity data 304 when the vehicle is in motion, and the deep learning neural network 320 can be trained or otherwise configured to determine, based on the vicinity data 304, surface conditions of a road. In other words, if such conditions are occurring, some manifestation of such conditions can be conveyed in the vicinity data 304 (e.g., rainfall can be depicted in the set of vicinity images 210), and the deep learning neural network 320 can recognize such manifestation of the conditions (e.g., the presence and severity of the rainfall). Therefore, for example, if an approaching vehicle is driving at high speeds, and animal is detected to be running into the road, and rainfall is present, the analysis component 110 can determine the animal to be very risky, as sudden braking by the approaching vehicle can cause, for example, hydroplaning.

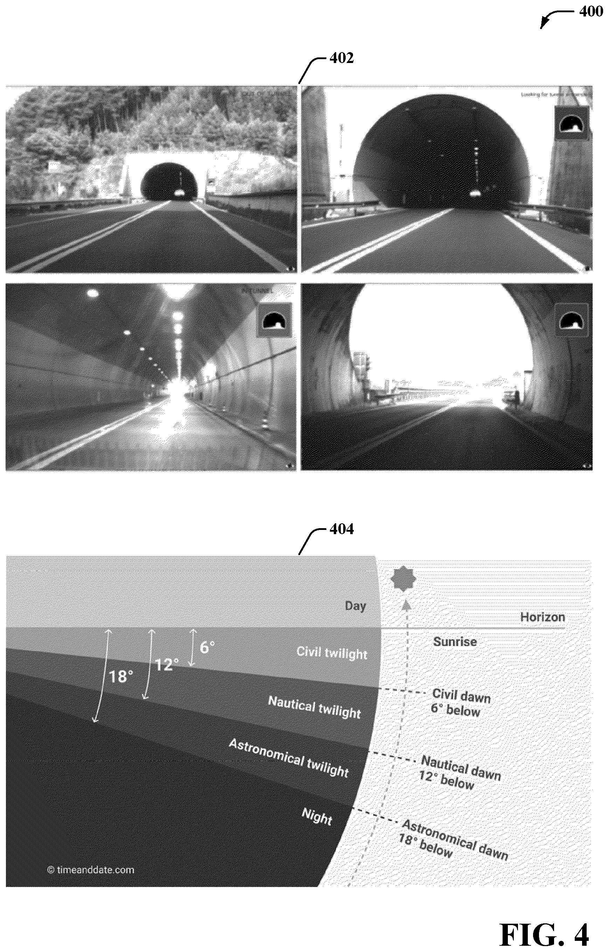

FIG. 4 illustrates an example, non-limiting diagram of tunnel detection and determination of external light conditions in accordance with one or more embodiments described herein.

Shown in FIG. 4, image 402 and image 404 depict situations from which the context component 112 can determine if external light conditions meet a define threshold for darkness. More specifically, image 492 depicts four images of a tunnel (e.g., entrance to a tunnel, inside a tunnel, exit of a tunnel), from which the recognition component 108 can detect sources of light (e.g., light at the exit of a tunnel, light within a tunnel) or lack of light (e.g., lack of light at the entrance of a tunnel). Therefore, the context component 112 can utilize the determined illuminated areas to determine if the identification component 106 should be engaged for object detection. The context component 112 can also predict approaching tunnels or ends of tunnels with GPS information as well as computer vision algorithms, and thus determine if object detection is desirable. For example, if vehicle one is driving in daylight, then the context component 112 can determine that object detection is not necessary to enable other vehicles to see objects on or alongside a road. However, if vehicle one is approaching a tunnel, the recognition component 108 can detect the entrance to the tunnel due to lack of illumination that occurs when entering a tunnel from daylight conditions. Therefore, the context component 112 can engage the identification component 106 to activate object detection upon entering the tunnel. Furthermore, the context component 112 can activate object detection for other situations of temporary darkness or lack of illumination (e.g., driving under a bridge, driving in a covered alley, driving in a dimly lit parking garage)

As depicted in image 404, the context component 112 can also use information on sunset times or twilight times to automatically activate object detection from the identification component 106. Furthermore, altitude, season of the year, time of day, or location of vehicle one can be utilized by the context component 112 to determine when object detection is desired. For example, vehicle one can utilize any suitable quipped sensors to determine the current angle of the sun, and thus decide to activate or deactivate object detection based on predefined settings As an example, the identification component 106 can be set to activate everyday after nautical twilight, depicted in image 404. Thus, if the context component 112 determines, via sensors, that the sun is 12 degrees below the horizon, the context component 112 can engage the identification component 106 to automatically activate object detection.

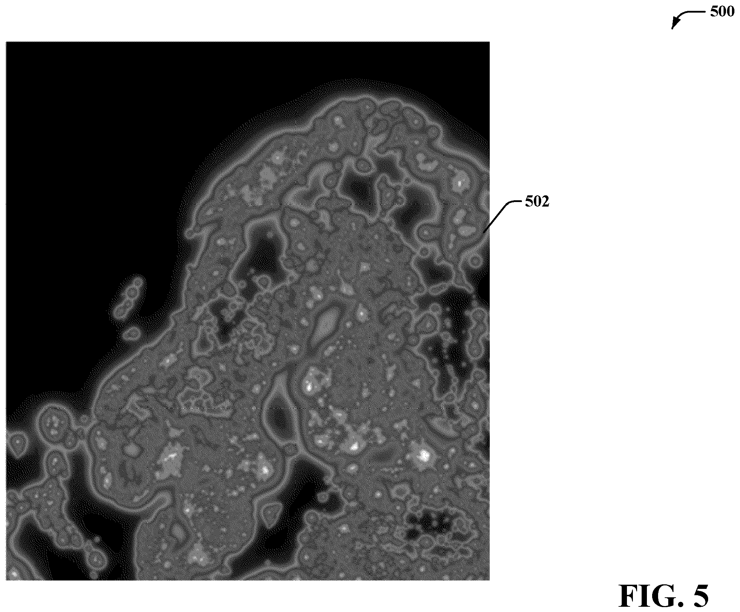

FIG. 5 illustrates an example, non-limiting light pollution map for risk assessment in accordance with one or more embodiments described herein.

Image 502 depicts a light pollution map of Sweden. In various embodiments, the context component 112 can utilize light pollution maps in determining if external light conditions meet the defined threshold for darkness. Thus, in response to a determination that external light conditions meet the defined threshold for darkness, the identification component 106 can be engaged to detect one or more objects on or alongside a road. Furthermore, light pollution maps can be utilized by the analysis component 110 to define how strict the risk assessment is for determining a risk level for the one or more identified objects. For example, by use of light pollution maps, the analysis component 110 can assign an object to be non-risky if detected in a city, but if detected in a countryside, the analysis component 110 can assign an object to be risky.

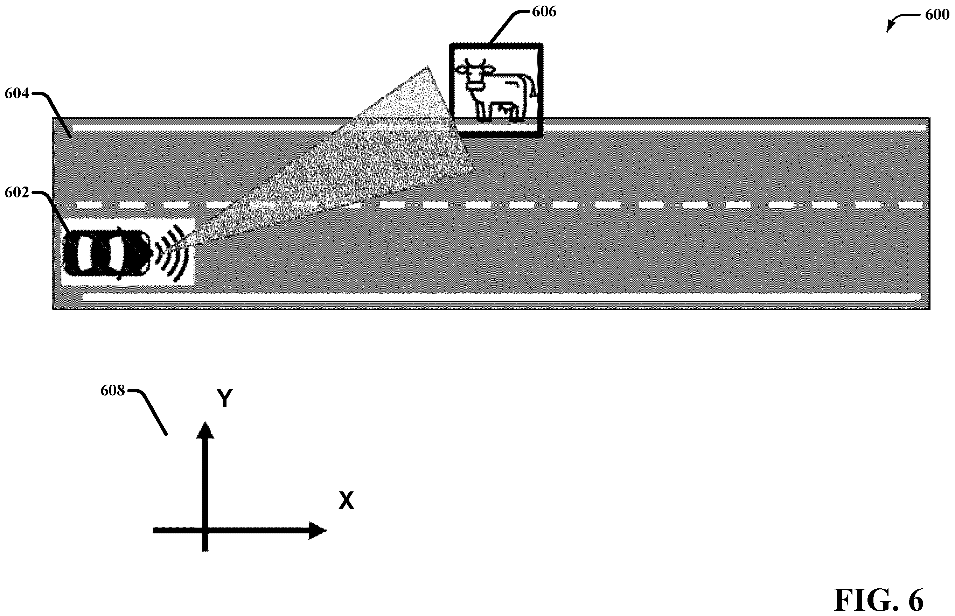

FIG. 6 illustrates an example, non-limiting depiction of object detection by a vehicle in accordance with one or more embodiments described herein.

In various embodiments, a vehicle 602 can be driving on a road 604. As used herein, vehicle 602 is an autonomous vehicle (AV). The identification component 106 of the system 100 that is onboard vehicle 602 can detect an object 606 near road 604. For example, as depicted in FIG. 6, road 604 can be a two-lane road and object 606 can be a cow that is standing outside the opposite lane of vehicle 602. However, road 604 can be any type of road and comprise of any number of lanes.

In various embodiments, the identification component 106 can obtain information about the object 606 that can thus be used by the analysis component 110 for the risk assessment. The identification component 106 can identify, via the inference component 318, the type of object that is detected. For example, the type of object can be a person, an animal, a vehicle, or a physical object (e.g., a pedestrian, a dog, a traffic cone). The identification component 106 can additionally identify if object 606 is moving and the direction in which it is moving. If object 606 is not moving, the identification component 106 can determine if object 606 is capable of moving. For example, if object 606 is not moving, and object 606 is identified to be a large rock, then the identification component 106 can conclude that object 606 is not capable of moving. Conversely, if object 606 is not moving, and object 606 is identified to be a child, then the identification component 106 can conclude that object 606 is capable of moving. Furthermore, if object 606 is moving, the identification component 106 can determine if the movement of object 606 is predictable, unpredictable, or unknown. For example, if object 606 is a cyclist riding straight alongside a road, the movement can be determined to be predictable. As another example, if object 606 is a deer, the movement can be determined to be unpredictable, as the direction or speed the deer can move is not predictable (e.g., animals can move in any direction). As yet another example, if the type of object is unidentifiable (e.g., there is an obstruction causing difficulty in identifying the object), the movement can be determined to be unknown. Even further, the identification component 106 can determine the location of the object with respect to lanes of road 604 using a coordinate system 608. For example, the identification component 106 can measure that object 606 is a number of meters away in the y direction and a number of meters away in the x direction from the current position of vehicle 602. Moreover, if other vehicles are detected, the identification component 106 can determine, in both the *x* and *y* direction, the distance between object 606 and the other detected vehicles.

In various embodiments, the analysis component 110 can use such parameters (e.g., type of object, in movement, movement direction, type of movement, able to move, location) to assign a risk level to object 602. Thus, the analysis component 110 can, in response to a determination of the assigned risk level, engage the execution component 202 to notify other vehicles within the vicinity or alter driving of vehicle 602 if vehicle 602 is an AV (e.g., change lanes, slow down, speed up, turn on hazard lights, turn on high beam lights).

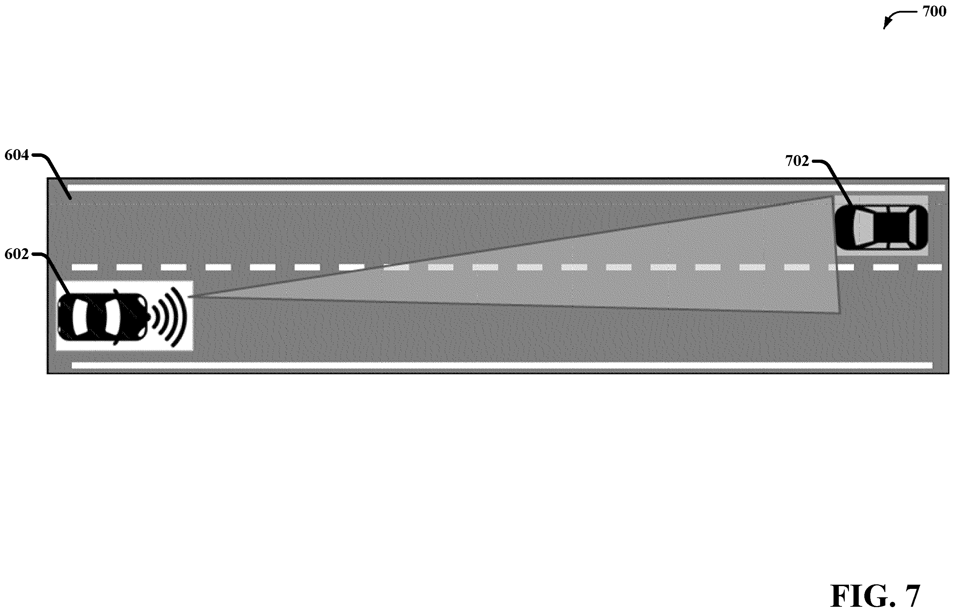

FIG. 7 illustrates an example, non-limiting depiction of vehicle detection by a vehicle in accordance with one or more embodiments described herein.

In various aspects, the identification component 106 can detect and identify, via inference component 318, an approaching vehicle 702 while vehicle 602 is driving on road 604. As used herein, vehicle 702 is a non-autonomous vehicle (non-AV) and may lack adequate sensors or technology to detect objects at night. However, vehicle 702 can be any suitable type of vehicle (e.g., vehicle 702 can be an AV). If vehicle 702 is an AV, notifications or reports sent by vehicle 602 can be ignored, as vehicle 702 likely comprises suitable sensors to detect objects in less-illuminated environments. Depending on the autonomy level of vehicle 702, vehicle 702 can also request the driver to take control. If vehicle 702 is an AV but is being driven in manual mode, notifications or reports sent by vehicle 602 can be displayed to the driver. In any case, the approaching vehicle 702 can be approaching vehicle 602 from any direction and be driving in any lane of road 604. Furthermore, the identification component 106 can detect more than one vehicles within the vicinity. In various aspects, the recognition component 108 can, from the identified approaching vehicle 702, detect light to determine an illuminated area. For example, the recognition component 108 can determine an illuminated area resulting from the headlights of approaching vehicle 702.

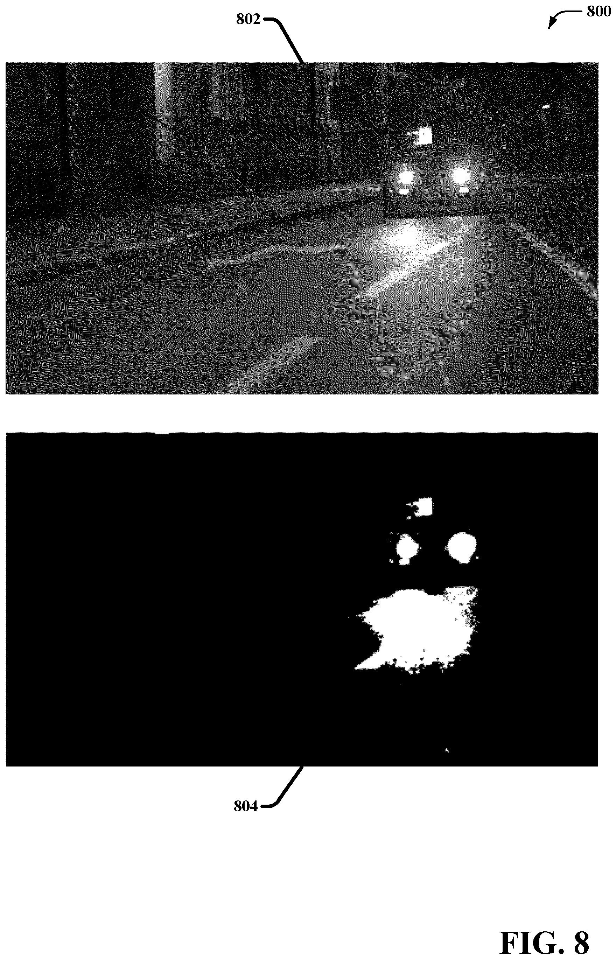

FIG. 8 illustrates an example, non-limiting depiction of vehicle light identification in accordance with one or more embodiments described herein.

Depicted at 802 is an image from the perspective of vehicle 602, wherein there is approaching vehicle 702. The image can be taken, for example, from vehicle cameras 306 on the front of vehicle 602. The recognition component 108 can use, as depicted at 804, conversion of the image at 802 to black and white to determine the illuminated area caused by lights on the approaching vehicle 702. As depicted in 804, the illuminated area is visualized by the white areas on the image (e.g., headlights of vehicle 702, small area in front of vehicle 702). As previously stated, other methods besides conversion to black and white can be employed by the recognition component 108 to determine the illuminated area from lights on vehicle 702.

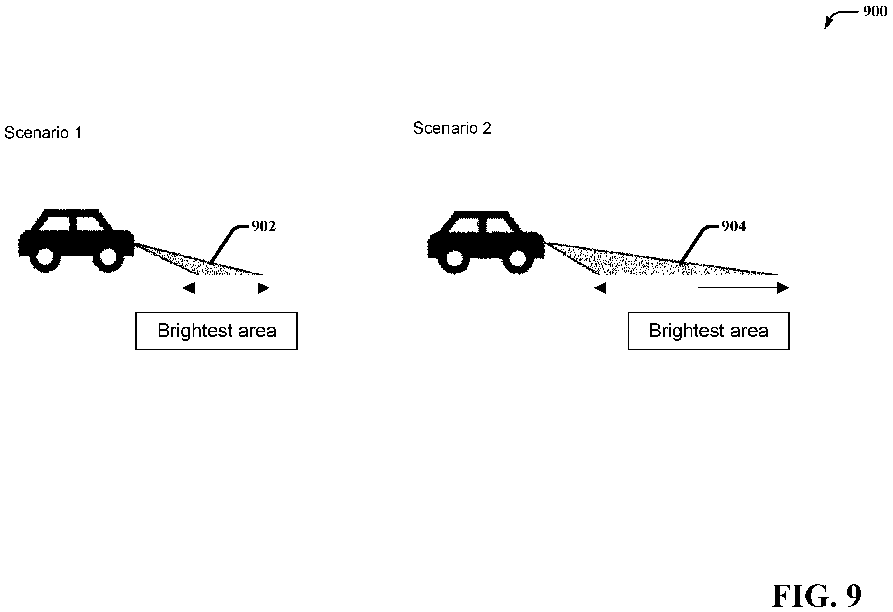

FIG. 9 illustrates an example, non-limiting depiction of vehicle light identification in accordance with one or more embodiments described herein.

Visualized by 902 in scenario one, the illuminated area (e.g., brightest area) covers a smaller region. Visualized by 904 in scenario two, the illuminated area (e.g., brightest area) covers a larger region. The identified illuminated area can be influenced by various factors. For example, activation of the lights or intensity of the lights set by the approaching vehicle 702 can affect the size of the determined illuminated area (e.g., if high beam lights are activated on the approaching vehicle, the illuminated area may be larger).

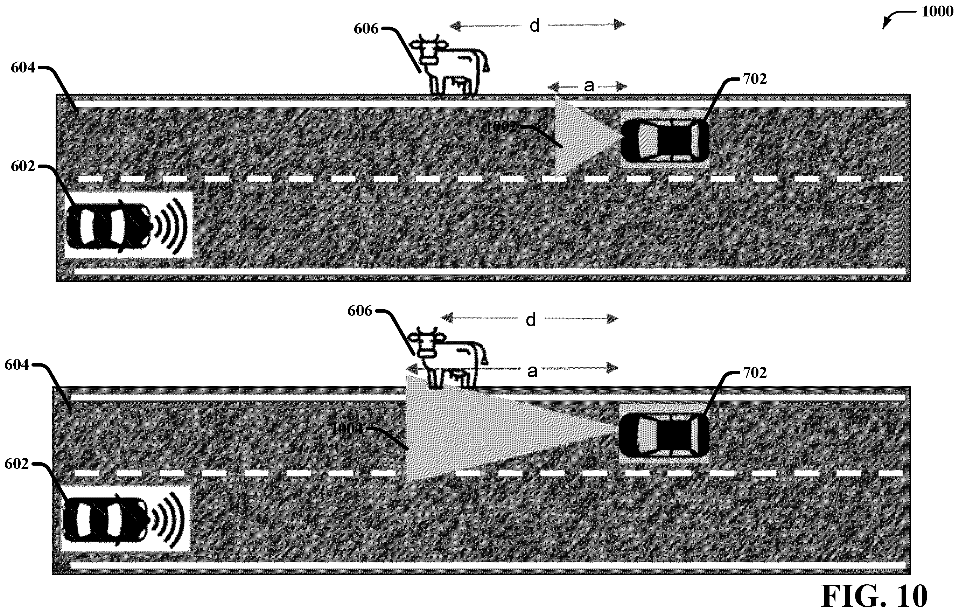

FIG. 10 illustrates an example, non-limiting depiction of object and vehicle light detection by a vehicle in accordance with one or more embodiments described herein.

As depicted in FIG. 10, the size of the illuminated area from approaching vehicle 702 affects the distance between detected objects and the illuminated area, based on location and light intensity of vehicle 702. For example, approaching vehicle 702 is a distance d from object 606 with an illuminated area 1002 of length a. The illuminated area 1002 is smaller (e.g., due to low intensity lights used), and therefore object 606 may not be visible to the driver of vehicle 702 because object 606 is not within the illuminated area 1002. Thus, the analysis component 110 can perform a risk assessment on object 606 to determine a risk level to further determine if a notification is to be sent to vehicle 702 or other safety measures (e.g., slow down vehicle 602) are to be taken. As another example, approaching vehicle 702 is a distance *d* from object 606 with an illuminated area 1004 of length *a.* The illuminated area 10024 is larger (e.g., due to high intensity lights used), and therefore object 606 is likely visible to the driver of vehicle 702 because object 606 is within the illuminated area 1004.

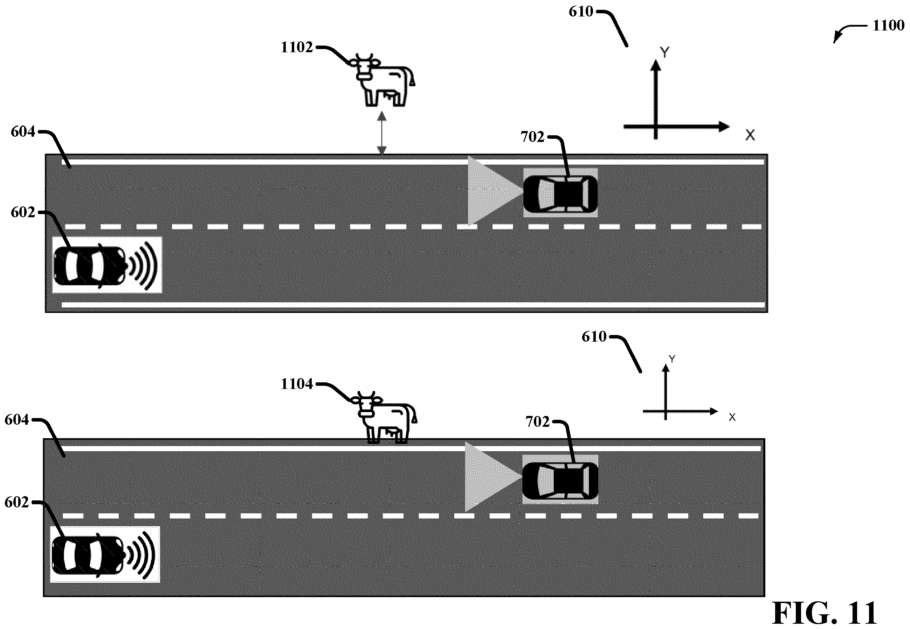

FIG. 11 illustrates an example, non-limiting depiction of object and vehicle light detection by a vehicle in accordance with one or more embodiments described herein.

In addition to determining the distance *d* between object 1102 and vehicle 702, the identification component 106 can determine, using coordinate system 610, a distance *y* of an object with respect to the road or lane the approaching vehicle 702 is driving in. For example, if the location of object 1102 indicates that it is farther away from the road lanes, then the recognition component 108 can infer that object 1102 is less likely to be visible to the driver of vehicle 702. The location of object 1102 can thus be used in the risk assessment to determine how risky object 1102 is. As another example, the location of object 1104 can indicate that it is near the road and lane in which vehicle approaching vehicle 702 is driving but not within the illuminated area. Then, the recognition component 108 can infer that object 1104 is also less likely to be visible to the driver of vehicle 702.

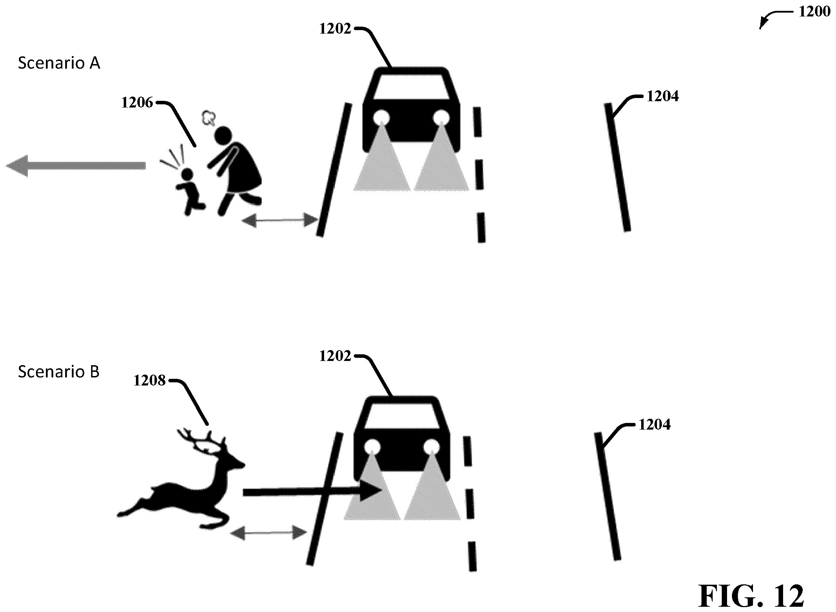

FIG. 12 illustrates an example, non-limiting depiction of object and vehicle light detection by a vehicle in accordance with one or more embodiments described herein.

In various aspects, the direction in which the object 606 is moving can be used by the analysis component 110 to determine a risk level associated with object 606. For example, if vehicle 1202 is approaching on road 1204 and pedestrians 1206 are detected such that pedestrians 1206 are moving away from the road, then the analysis component 110 may determine pedestrians 1206 to be less risky. As another example, if vehicle 1202 is approaching on road 1204 and deer 1208 is detected such that deer 1208 is running towards the road, then the analysis component 110 may determine deer 1208 to be very risky. Furthermore, the speed in which the objects are moving can also be considered in determining the risk level. For example, a pedestrian is walking at a slow pace towards the road can be less risky than a pedestrian running towards the road.

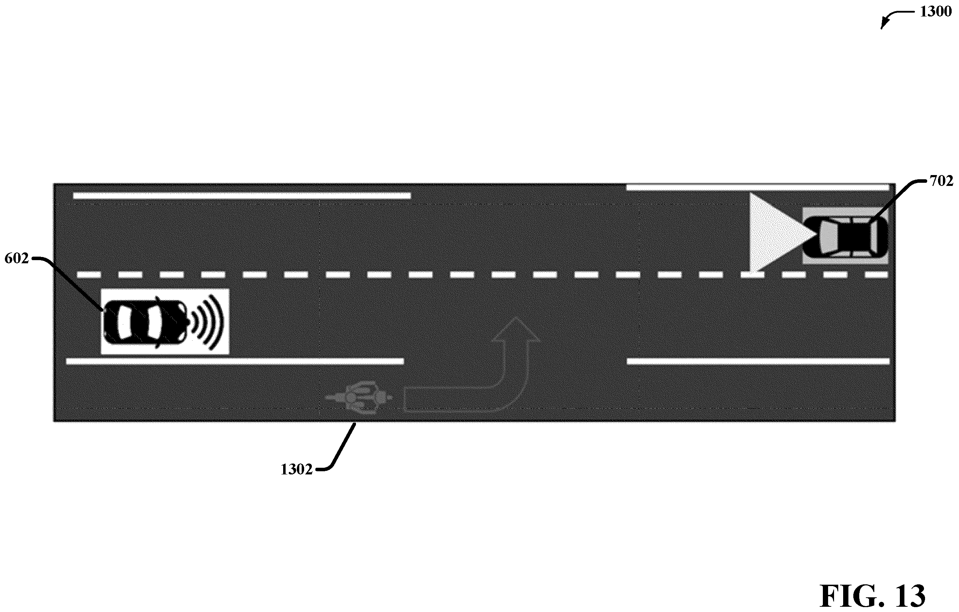

FIG. 13 illustrates an example, non-limiting depiction of object detection by a vehicle in accordance with one or more embodiments described herein.

In various instances, the identification component 106 can detect a cyclist 1302 alongside the road that is outside the illuminated area from vehicle 702. Furthermore, the cyclist 106 can signal a turn to vehicle 602 (e.g., with hand gestures). For example, as depicted in FIG. 13, cyclist 1302 is signaling a left turn across the road that will result in the cyclist 1302 passing across vehicle 702. However, due to lighting conditions, it can be assumed that the cyclist 1302 is not visible to vehicle 702, and therefore vehicle 702 is unaware that the cyclist 1302 will cross the road. Thus, the identification component 106 can detect and identify the direction the cyclist 1302 is planning to turn. Based on the signaled direction, the analysis component 110 can perform a risk assessment on the cyclist 1302 and decide to engage or not engage the execution component 202 to transmit an electronic notification to vehicle 702, informing the driver of the turning cyclist 1302. For example, if the cyclist 1302 is signaling to turn away from the road and the determined risk level is non-risky, the analysis component 110 can refrain from engaging the execution component 202 to notify vehicle 702. Conversely, and as depicted in FIG. 13, if the cyclist 1302 is signaling to turn into the road and the determined risk level is risky, the execution component 202 can be engaged to notify vehicle 702.

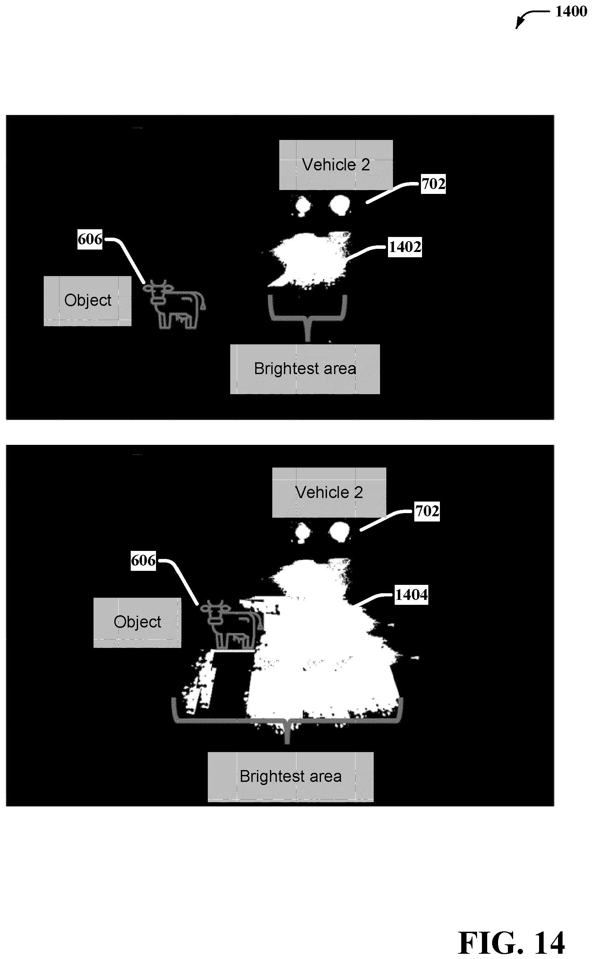

FIG. 14 illustrates an example, non-limiting depiction of object and vehicle light detection by a vehicle in accordance with one or more embodiments described herein.

Depicted in FIG. 14 are images from the perspective of vehicle 602 that are converted to black and white to illustrate an illuminated area from approaching vehicle 702. Illuminated area 1402 from vehicle 702 comprises a small area that can be caused for various reasons, such as because low beam lights are utilized. Furthermore, object 606 is located far from illuminated area 1402, as shown by object 606 not located in the white region of the image that represents illuminated area 1402. Thus, the recognition component 108 can conclude that object 606 is not located within illuminated area 1402 and can assume that vehicle 702 is unable to see object 606.

Conversely, illuminated area 1404 from vehicle 702 comprises a larger area that can be caused for various reasons, such as high beam lights are utilized. Furthermore, object 606 is located within the white region of the image that represents illuminated area 1404. Moreover, a section in front of object 606 lacks illumination, signaling that object 606 is casting a shadow from the lights of vehicle 702. Thus, the recognition component 108 can conclude that object 606 is located within illuminated area 1404 and can assume that vehicle 702 can see object 606.

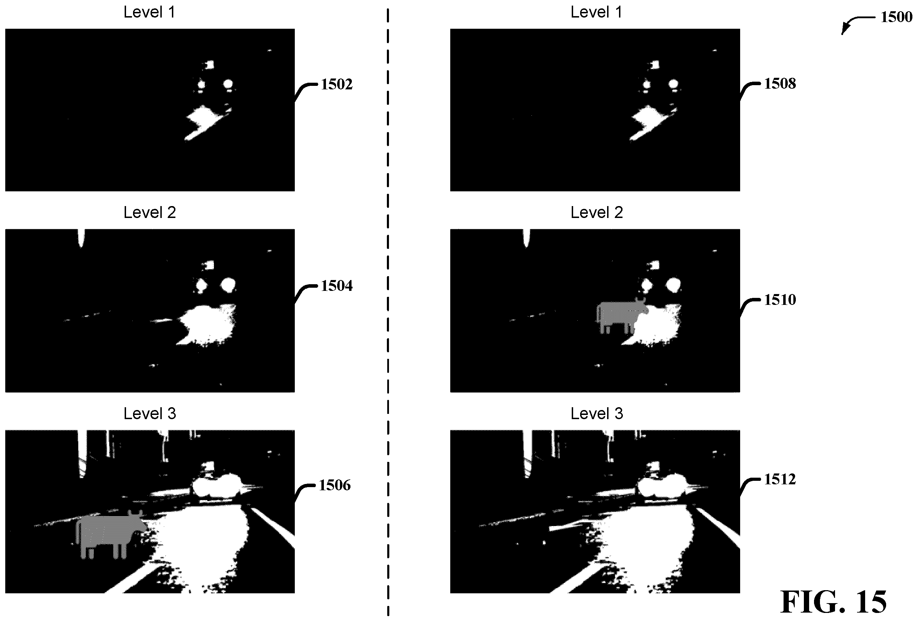

FIG. 15 illustrates an example, non-limiting depiction of brightness levels of an illumination area for risk assessment in accordance with one or more embodiments described herein.

In various embodiments, the recognition component 108 can define brightness levels of the illuminated area, wherein the brightness levels are based on light intensity. Brightness levels can be defined because light loses intensity as distance from the light source increases. For example, and as used herein, the recognition component 108 can utilize three levels of brightness to define the illuminated area. However, any suitable number of brightness levels can be utilized. Displayed in FIG. 15 are example vicinity images 312 from front-facing vehicle cameras 306 that are converted to black and white to illustrate an illuminated area from approaching vehicle 702. As an example, image 1502 displays level 1 brightness, image 1504 displays level 2 brightness, and image 1506 displays level 3 brightness, wherein level 1 brightness includes highest intensity light and level 3 includes lowest intensity light. Therefore, level 1 brightness indicates a closer distance to vehicle 702 and level 3 brightness indicates a farther distance from vehicle 702. As illustrated in image 1506, if an object is outside the three levels of brightness, the risk assessment can determine the object to be riskier, as it is not visible to vehicle 702. As another example, image 1508 displays level 1 brightness, image 1510 displays level 2 brightness, and image 1512 displays level 3 brightness. Depicted by image 1510, if the object is within the level 2 brightness but outside level 1 brightness, the risk assessment can conclude the object to be a medium risk. Thus, the execution component 202 can determine the appropriate actions to execute in response to a determination of the risk level (e.g., activate dynamic bend lighting if medium risk, perform a lane change if high risk).

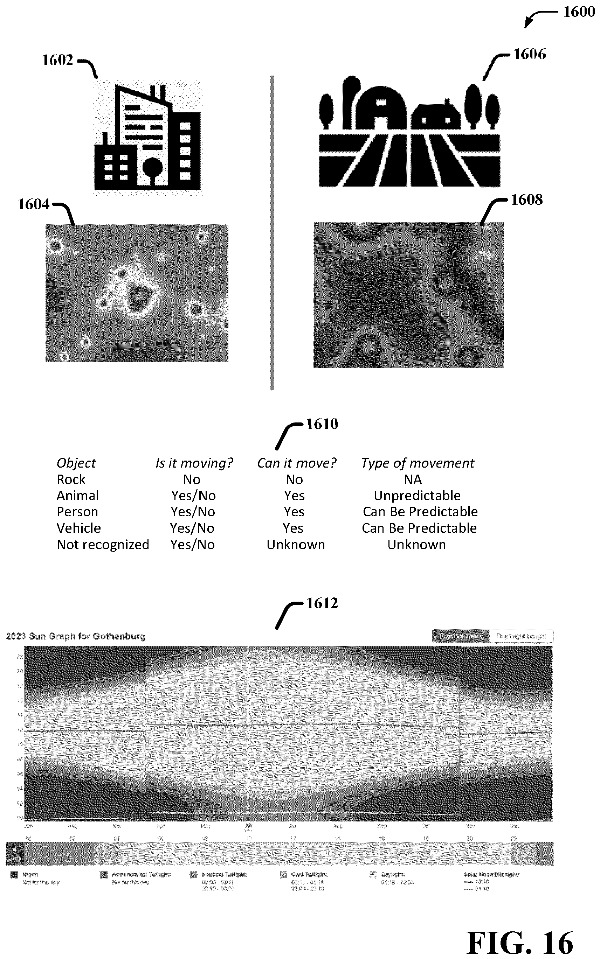

FIG. 16 illustrates an example, non-limiting diagram of risk assessment parameters in accordance with one or more embodiments described herein.

In various embodiments, the analysis component 110 can consider various factors in the risk assessment to determine a risk level for one or more objects. In various aspects, information about the identified objects, learned by identification component 106, can be considered in the risk assessment. Depicted at 1610 are various examples of objects that can be detected by the identification component 106s. For example, the object can be identified as a rock that is positioned in the middle of a road. The identification component 106 can further determine that the rock is not moving and is not capable of moving. As another example, the object can be identified as an animal. The identification component 106 can further determine if the animal is moving. The identification component 106 can also determine that the object is capable of moving and can exhibit unpredictable movement as it is an animal. As yet another example, the object can be identified as a person. The identification component 106 can further determine if the person is moving and the type of movement the person is exhibiting (e.g., predictable, unpredictable). The identification component 106 can also determine that the object is capable of moving as the object is a person. As even another example, the object can be identified as a vehicle. The identification component 106 can further determine if the vehicle is moving and the type of movement the person is exhibiting. The identification component 106 can also determine that the object is capable of moving as the object is a vehicle. As yet another example, the object can be unrecognized (e.g., an obstruction is causing challenges in identifying the object, the object is unknown). The identification component 106 can further determine if the unrecognized object is moving. The identification component 106 can also determine, based on the object being unrecognizable, that the object's capability of moving is unknown and the type of movement is unknown.

In various aspects, the analysis component 110 can also consider light pollution maps and geographical location of the vehicles in the risk assessment. For example, vehicles can be located in a countryside 1606 with a light pollution map 1608. Due to less light pollution, the analysis component 110 can determine an object to be less risky in the countryside than in a city 1602 with more light pollution, shown in light pollution map 1604.

In various instances, the time of day can be considered in the risk assessment to determine a risk level for one or more objects. For example, sun graph 1612 can be used to determine external light conditions and thus the analysis component 110 can use the determined external light conditions to decide how risky the one or more objects are (e.g., how visible the one or more objects are to an approaching vehicle).

In various cases, velocity of vehicle 702 can also affect which risk level is assigned to the one or more objects because velocity can affect the reaction time of a driver of vehicle 702. For example, if an object is detected near a road and vehicle 702 is driving at a high velocity, the analysis component 110 can determine that the object is very risky. Conversely, if the same object is detected but vehicle 702 is driving at a low velocity, the analysis component 110 can determine that the object is low risk or not risky.

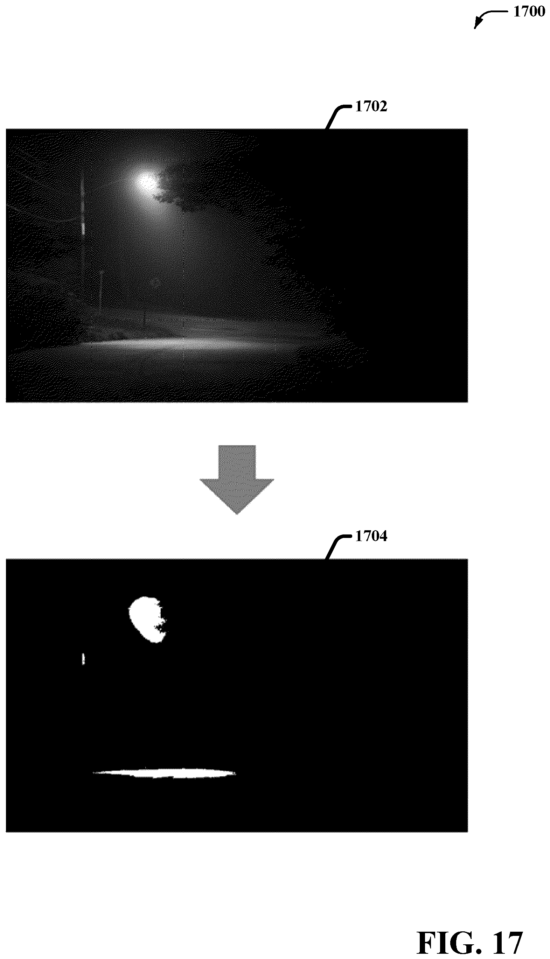

FIG. 17 illustrates an example, non-limiting depiction of other light source detection by a vehicle in accordance with one or more embodiments described herein.

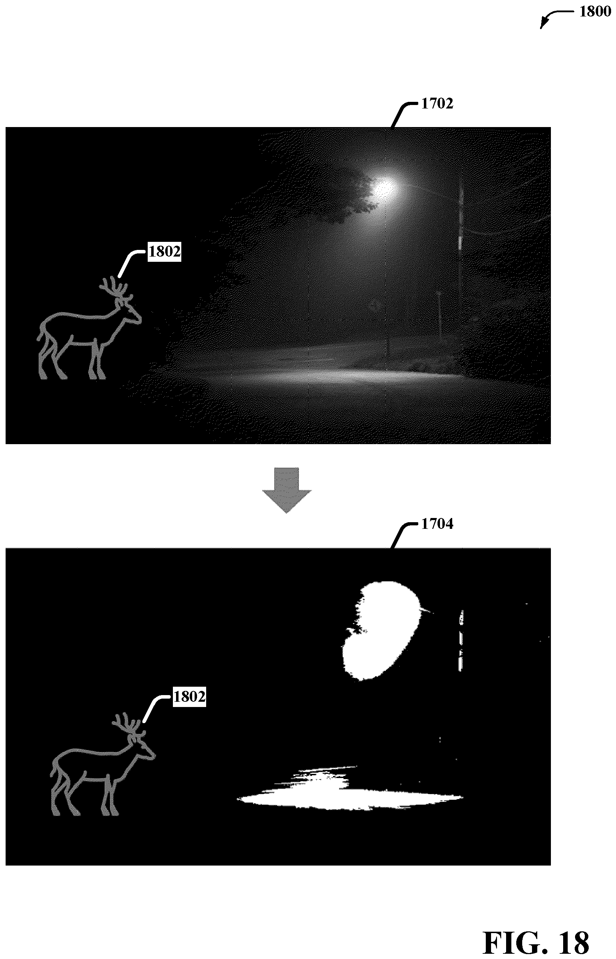

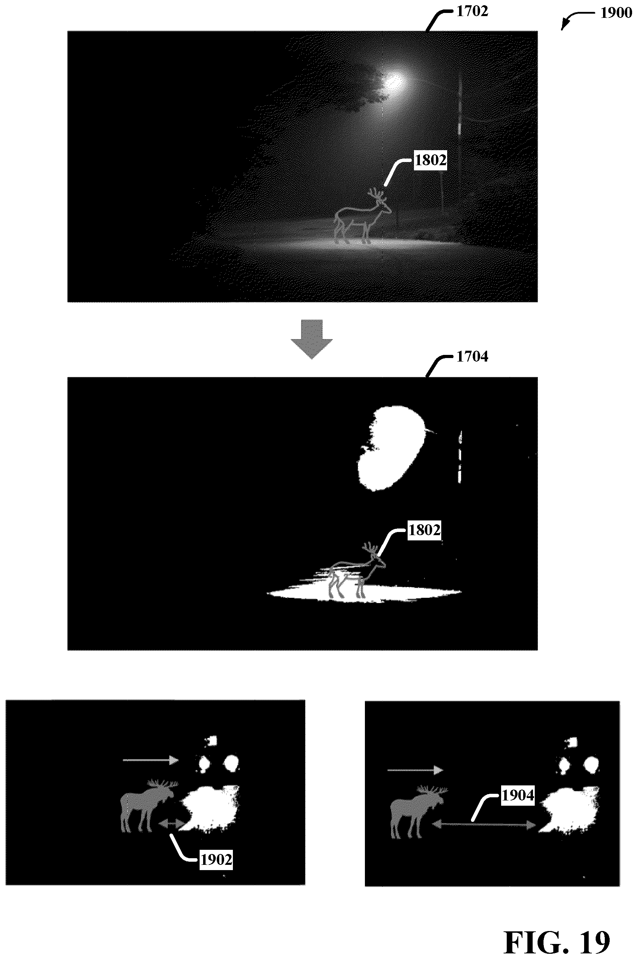

In various embodiments, the risk assessment can further consider other light sources in the vicinity to determine risk levels associated with detected objects. More specifically, the recognition component 108 can identify an illuminated area from the other light sources. For example, the other light sources can be streetlights or lighting from other vehicles in the vicinity). Therefore, the recognition component 108 can identify if the one or more detected objects are within the illuminated area from the other light sources. For example, depicted in 1702 is the perspective of vehicle 602, in which a streetlight is detected alongside a road. The recognition component 108 can convert image 1702 to black and white, as shown by 1704, to identify an illuminated area from the streetlight. Now referencing FIG. 18, an object 1802 can be detected near the road. As shown, the object 1802 is not near the streetlight or within the illuminated area from the streetlight. Thus, the recognition component 108 can assume that object 1802 is not visible to approaching vehicles in the vicinity. For example, if vehicle 702 is approaching vehicle 602 from the opposite direction and object 1802 is not in the illuminated area from lights on vehicle 702 as well as from the streetlight, then it can be assumed that object 1802 is not visible to the driver of vehicle 702. FIG. 19 illustrates another example wherein object 1802 is located within the illuminated area from the streetlight. Thus, if vehicle 702 is approaching, the recognition component 108 can assume that object 1802 is within an illuminated area and therefore, likely to be visible to the driver of vehicle 702. The recognition component 108 can also assume object 1802 is visible to the driver of vehicle 702 even if object 1802 is not located within the illuminated area from lights on vehicle 702 because object 1802 is in the streetlight. In response to a determination that object 1802 is or is not within an illuminated area from the streetlight, the analysis component 110 can assign a risk level to object 1802. Moreover, the recognition component 108 can determine the distance between an object and the illuminated area. Thus, the determined distance (e.g., distance 1902, distance 1904) can be used as a parameter in the risk assessment to assign a risk level to the object.

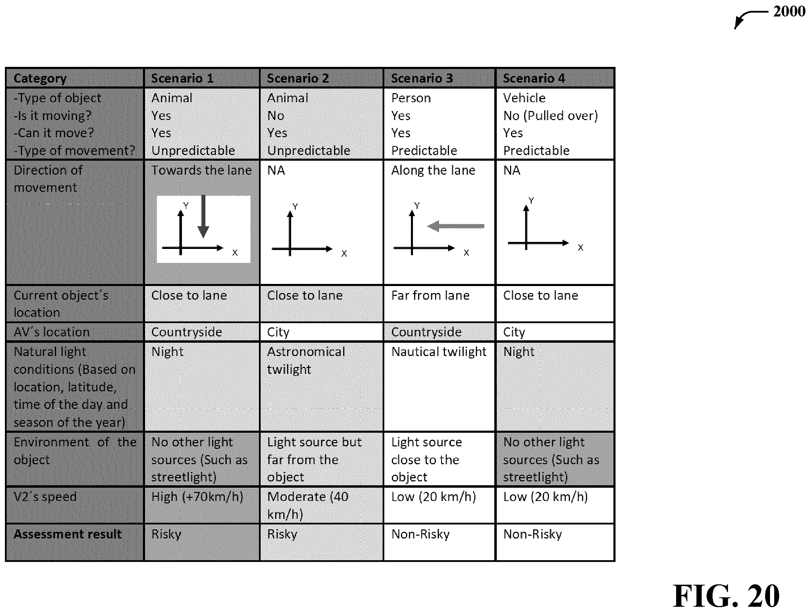

FIG. 20 illustrates an example, non-limiting chart 2000 of risk assessment of detected objects in accordance with one or more embodiments described herein.

In various aspects, chart 2000 shows risk assessments of various situations and parameters that are used to determine risk levels. As shown in chart 2000, the risk assessment determines a risk level for each scenario using parameters that comprise, but are not limited to, object information (e.g., is moving, is capable of moving, type of movement), movement direction of the object, current location of the object, location of vehicle 602, natural light conditions (e.g., night, astronomical twilight, nautical twilight), environment of the object (e.g., presence of other light sources), and velocity of vehicle 702. In various cases, weather conditions (e.g., presence of ice on a road, rainfall, fog), road types (e.g., downhill roads, curved roads), or vehicle type (e.g., sedan, semi-truck, van) can also be considered in the risk assessment. For example, if the approaching vehicle 702 is driving downhill in the rain and is a semi-truck, the risk assessment may assign a higher risk level. Conversely, if a sedan is driving downhill in dry weather, the risk assessment may assign a lower risk level due to the smaller size of the sedan and improved weather conditions. Therefore, there may be less potential for a hazardous collision to occur from a detected object.

In the four scenarios illustrated in chart 2000, it is assumed that the detected objects are not located within the illuminated area from vehicle 702, and therefore are assumed to be not visible to the driver of vehicle 702. Furthermore, chart 2000 depicts a degree of riskiness for each parameter of each scenario. More specifically, sections that are dark gray represent higher risk, sections that are light gray represent medium risk, and sections that are white represent little to no risk.

As an example, in scenario 1, the identification component 106 can detect an animal that is moving with unpredictable movement. Furthermore, the animal can be close to the lane of the road and moving in a direction towards the road. Moreover, the vehicles (e.g., vehicle 602 and vehicle 702) can be located in a countryside and driving at night (e.g., determined in reference to image 404). No other lights sources are detected in scenario 1 and vehicle 702 is travelling at a high speed (e.g., over 70km/h). Based on these parameters of scenario 1, the analysis component 110 can assign a risk level of risky to the object.

In scenario 2, the identification component 106 can detect an animal that is not moving and can exhibit unpredictable movement. Furthermore, the animal can be close to the lane of the road. Moreover, the vehicles can be located in a city and driving at astronomical twilight. Another lights source is detected in scenario 2, however the object is located far from the other light source. Additionally, vehicle 702 is travelling at a moderate speed (e.g., 40km/h). Based on these parameters of scenario 2, the analysis component 110 can assign a risk level of risky to the object.

In scenario 3, the identification component 106 can detect a person that is moving and is exhibiting predictable movement. Furthermore, the person is far from the lane of the road and moving parallel with the road in the same direction as vehicle 702. Moreover, the vehicles can be located in a countryside and driving at nautical twilight. Another lights source is detected and the object is located near the other light source. Additionally, vehicle 702 is travelling at a low speed (e.g., 20km/h). Based on these parameters of scenario 3, the analysis component 110 can assign a risk level of non-risky to the object.

In scenario 4, the identification component 106 can detect a vehicle that is not moving and is pulled over close to a lane of the road. Because the vehicle is pulled over, the vehicle is exhibiting predictable movement. Moreover, the vehicles (e.g., vehicle 602, vehicle 702, and the detected vehicle) are located in a city and driving at night. Another lights source is detected and the object is located near the other light source. Additionally, vehicle 702 is travelling at a low speed (e.g., 20km/h). Based on these parameters of scenario 4, the analysis component 110 can assign a risk level of non-risky to the object.

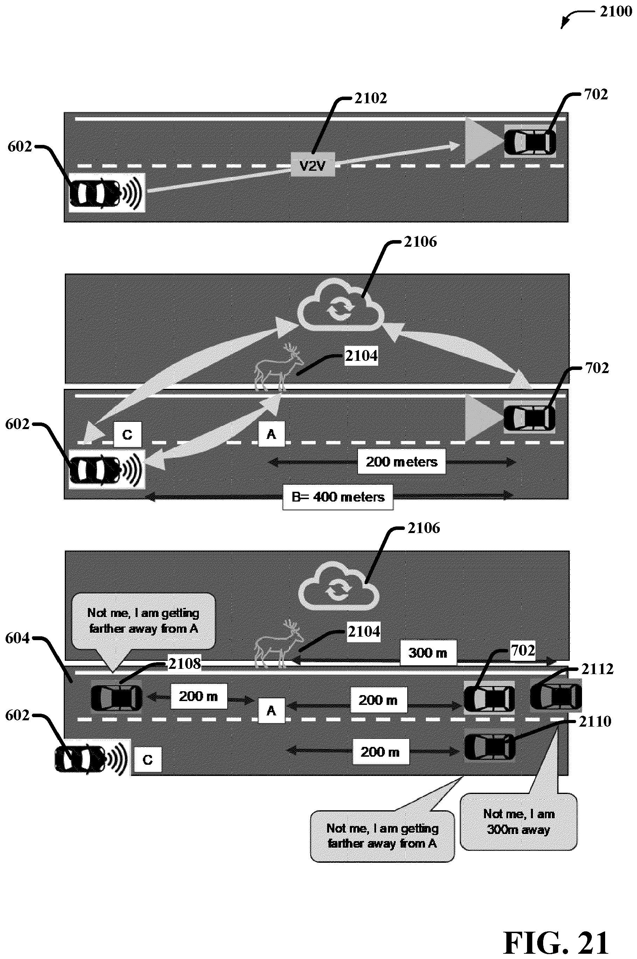

FIG. 21 illustrates an example, non-limiting depiction of vehicle communication for object detection in accordance with one or more embodiments described herein.

In various embodiments, if the analysis component 110 concludes that one or more objects have a risk level of risky, the execution component 202 can transmit an electronic report to vehicle 702. The execution component 202 can transmit the electronic report through vehicle-to-vehicle (V2V) communication, as shown by 2102. To enable V2V communication, vehicle 702 must be equipped with wireless communication devices that can support V2V communication (e.g., antennas, transceivers, communication protocols).

In various embodiments, the execution component 202 can also transmit the electronic report to vehicle 702 through a cloud system 2106. To enable communication through cloud system 2106, vehicle 702 must be equipped with GPS to allow vehicle 602 to know the location of vehicle 702 and internet connection to allow vehicle 702 to receive the report. Vehicle 602 can transmit the electronic report by first sending the report to the cloud system 2106. The report can include information on the detected object (e.g., location of the object, type of object, object movement) to inform the driver of vehicle 702 of the detected object. Furthermore, the location of vehicle 702 is also known, therefore, the report can also include a distance between the object and vehicle 702. Moreover, the report can inform vehicle 702 if the object is moving closer or farther from the location of vehicle 702.

As an example, vehicle 602 can detect object 2104 (e.g., a deer), wherein the identification component 106 can determine, using GPS, the location C of vehicle 602 and a distance d between vehicle 602 and vehicle 702. Furthermore, the identification component 106 can determine a distance A between object 2104 and vehicle 602, as well as the distance between object 2104 and vehicle 702. The recognition component 108 can determine that object 2104 is not located within an identified illuminated area from lights of vehicle 702, and therefore the analysis component 110 can perform a risk assessment and conclude that object 2104 is risky. In response to a determination that object 2104 is risky, the execution component 202 can transmit a report through the cloud system 2106 to vehicle 702 about object 2104. In this example, *B* = 400m and the distance between object 2104 and vehicle 702 is 200m. The report can include the distance between object 2104 and vehicle 702 along with information about object 2104 (e.g., is an animal, is in motion, direction of movement).

As another example, there can be vehicle 2108, vehicle 2110, and vehicle 2112 in addition to vehicle 602 and vehicle 702 on road 604. There can also be object 2104 as in the previous example. The cloud system 2106 can differentiate which vehicles to send the report to by the location of the vehicles, distance of the vehicles from the object, and direction the vehicles are travelling in. In this example, vehicle 2110 is a horizontal distance of 200m from object 2104 and is travelling away from object 2104. Therefore, the report will not be sent to vehicle 2110. Similarly, vehicle 2108 is 200m from object 2104 and travelling away from object 2104. Therefore, the report will not be transmitted to vehicle 2108. Vehicle 2112 is driving behind vehicle 702 towards object 2104, however, vehicle 2112 is 300m away. Therefore, due to a larger distance from object 2104, the report will not be sent to vehicle 2102. As in the previous example, vehicle 702 is 200m from object 2104 and driving towards object 2104. Therefore, vehicle 702 can receive the report through the cloud system 2106. In various aspects, the same methodology to determine which vehicles receive the report can be applied with V2V communication.

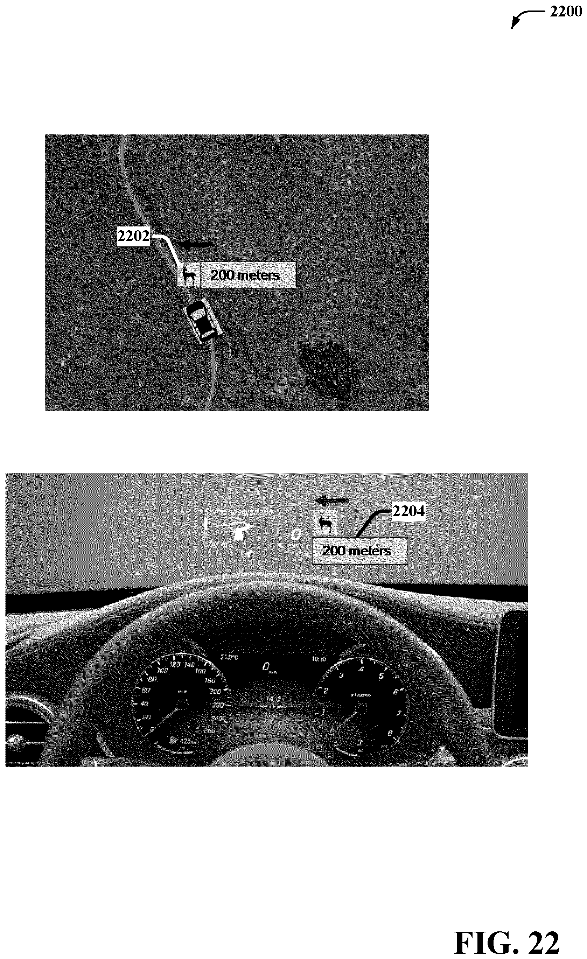

FIG. 22 illustrates an example, non-limiting depiction of vehicle notifications of detected objects in accordance with one or more embodiments described herein.

In the example referenced in FIG. 21, object 2104 is 200m in front of vehicle 702 and moving towards the road. The received report from vehicle 602 can be displayed in vehicle 702, for example, as illustrated by 2202 and 2204. In various cases, if vehicle 602 detects an animal, an icon representative of an animal can be displayed on any suitable display of vehicle 702 (e.g., heads-up display, dashboard display). The direction of movement and current distance from the object can also be displayed. Depicted by 2202 is an icon representing an animal, an arrow pointing in the direction the animal is moving, and the current distance from the animal (e.g., 200m) presented on a navigational display or application. As another example, depicted by 2204, an icon, directional arrow, and current distance can be displayed on a heads-up display of vehicle 702. The received report can be displayed in any suitable format and can display any suitable information that can assist the driver in avoiding the detected object or potential collisions. For example, the notification can contain further information on the speed of the object.

Furthermore, the risk assessments can be updated in real-time, therefore, the notification can be updated in real-time if current conditions change. For example, if the animal changes direction, the new direction can be updated in the risk assessment and received by vehicle 702 to be displayed for the driver. As another example, if an object begins to move closer to vehicle 702, the distance can be simultaneously updated (e.g., the distance displayed will decrease as the object moves closer). Moreover, an audible alert can be played in vehicle 702 depending on the risk level of the object. For example, if an animal is running into the road and vehicle 702 is driving at a high speed, an audible alert can be played to quickly warn the driver of vehicle 702 to avoid a collision.

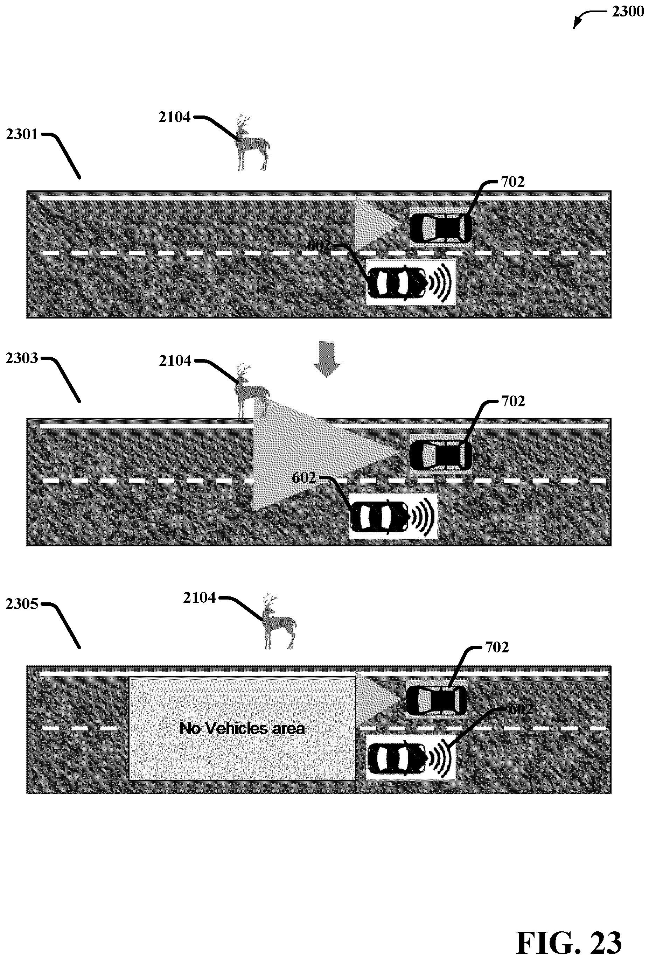

FIG. 23 illustrates an example, non-limiting depiction of object and vehicle light detection by a vehicle for risk assessment in accordance with one or more embodiments described herein.

In various embodiments, the identification component 106 can detect if other vehicles are driving behind vehicle 602. If, after detecting object 2104, no vehicles are detected behind vehicle 602 and vehicle 602 has passed approaching vehicle 702, as depicted in example 2301, the execution component 202 can notify and instruct vehicle 702 to increase intensity of the headlights, depicted in 2303, to enable higher visibility or awareness for the driver. Vehicle 702 can be instructed to increase light intensity if no vehicles are detected behind vehicle 602. Therefore, the high intensity lights of vehicle 702 do not impair visibility of vehicles that may be driving behind vehicle 602. Furthermore, as depicted at 2305, if other vehicles are detected behind vehicle 602, so long as the other vehicles are a sufficient distance away from vehicle 702, the execution component 202 can transmit a notification to vehicle 702 to temporarily activate high beam lights.

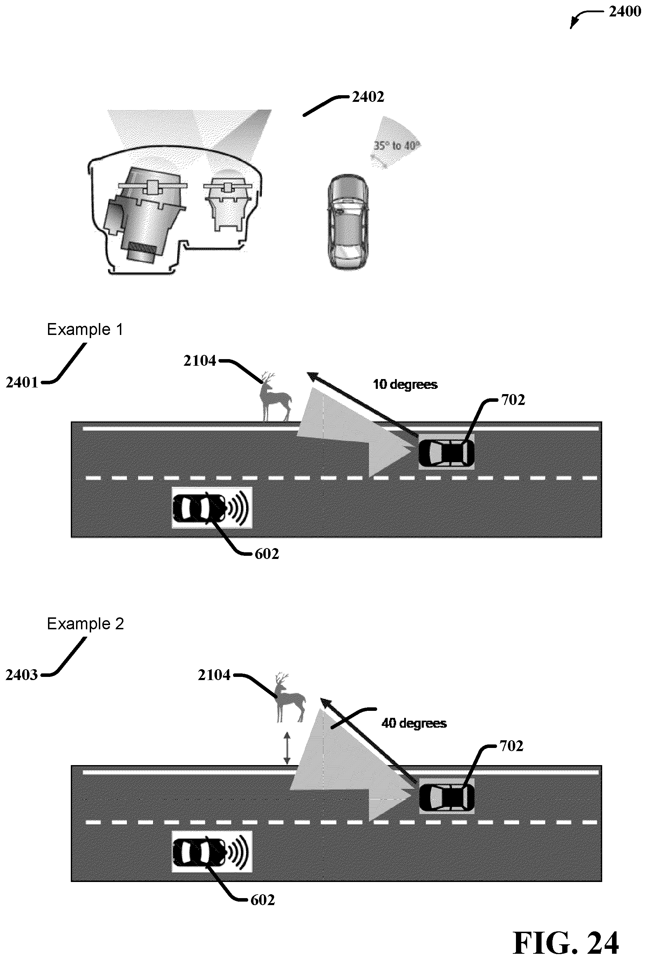

FIG. 24 illustrates an example, non-limiting depiction of dynamic bend lighting for object detection by a vehicle in accordance with one or more embodiments described herein.

In various embodiments, in response to a determination of the risk level of object 2104, the execution component 202 can activate dynamic bend lighting if the vehicle is equipped with it. Dynamic bend lighting, as illustrated at 2402, can enable headlights of a vehicle to turn based on the angle of the steering wheel. For example, if a vehicle is turning, the headlights can turn in the direction of the turn to allow enhanced visibility on the road. In various aspects, dynamic bend lighting can be utilized to enable the driver of vehicle 702 to have visibility of object 2104. More specifically, the headlights can turn based on the distance between a detected object and the lane that approaching vehicle 702 is driving in. In example 2401, object 2104 is positioned next to the lane. Therefore, the headlights of vehicle 702 can be turned approximately 10 degrees to illuminate and allow the driver to see object 2104. In example 2403, object 2104 is located a number of meters away from the lane. Therefore, the headlights of vehicle 702 can be turned approximately 40 degrees to illuminate and allow the driver to see object 2104. In various instances, dynamic bend lighting can be executed if the risk level of object 2104 is determined to be risky or very risky. Furthermore, the execution component 202 can activate dynamic bend lighting on vehicle 602 to illuminate the object 2104. Thus, if vehicle 702 is not capable of using dynamic bend lighting, the object 2104 can still be illuminated and made visible to vehicle 702.

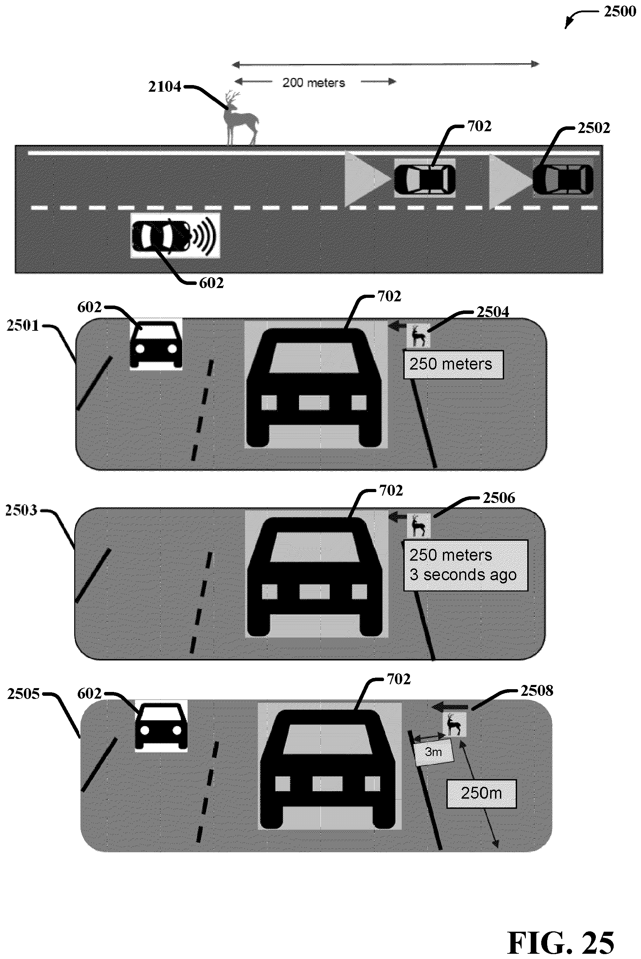

FIG. 25 illustrates an example, non-limiting depiction of notifying vehicles within a vicinity of detected objects in accordance with one or more embodiments described herein.

In various embodiments, the identification component 106 can detect vehicles driving behind vehicle 702 (e.g., vehicle 2502) and determine their distance from object 2104. For example, vehicle 2502 is located 250m from object 2104. Furthermore, vehicle 702 is located 200m from object 2104. In such a scenario, vehicle 702 can become a blind spot for vehicle 2502, and therefore cause potential for a collision (e.g., vehicle 2502 collides with object 2104, vehicle 702 collides with object 2104 which can cause vehicle 2502 to collide with vehicle 702).

Depicted at 2501 is the perspective of vehicle 2502, wherein vehicle 2502 is driving behind vehicle 702 and object 2104 is 250m ahead. To enable awareness of the object 2104 to vehicle 2502, vehicle 602 can send a notification to vehicle 2502 to inform the driver of object 2104. For example, a notification 2504 can be displayed in vehicle 2502 that displays an icon representative of object 2104, an arrow signaling the direction of movement, and the distance between object 2104 and vehicle 2502. The notification 2504 can prevent a collision between vehicle 702 and vehicle 2502 in the case of vehicle 702 suddenly applying brakes to avoid object 2104 (e.g., the notification can warn vehicle 2502 to maintain a larger following distance or reduce speed). Furthermore, as vehicle 2502 approaches object 2104, the displayed distance can be updated in real time.

In various instances, and depicted at 2503, if vehicle 602 can no longer detect object 2104 (e.g., vehicle 602 has passed object 2104), vehicle 2502 can receive a notification 2506 that includes the location of object 2104 from when it was last detected, as well as how long-ago object 2104 was detected. For example, if vehicle 602 passes object 2104, vehicle 2502 can receive notification 2506 that states object 2104 was last detected 3 seconds ago and was last detected to be 250m in front of vehicle 2502. In various cases, notifications sent to vehicle 2502, or other vehicles in the vicinity that have a blind spot, can comprise the distance between object 2104 and the road (e.g., lane of the vehicle with a blind spot). For example, as depicted at 2505, notification 2508 can display that object 2104 is 3m from the lane.

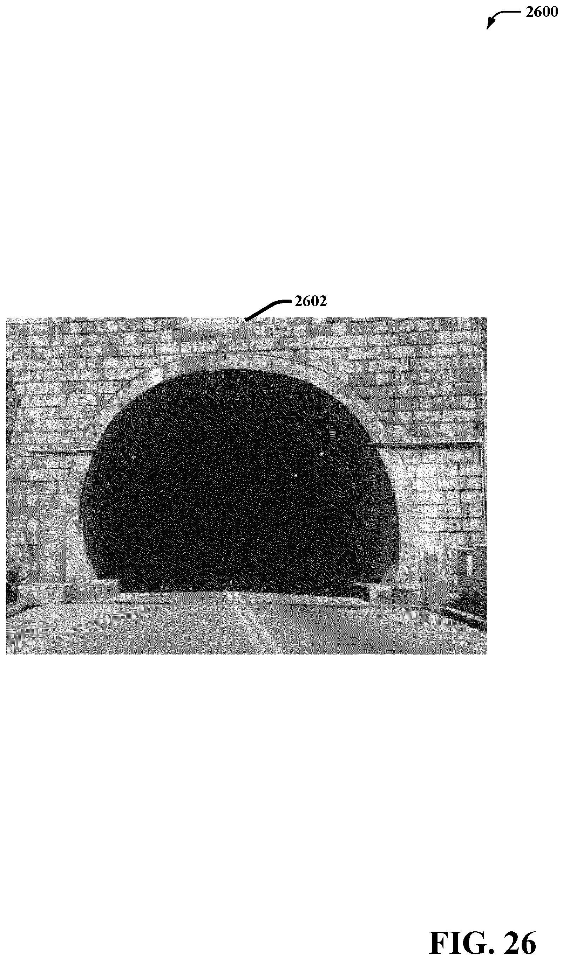

FIG. 26 illustrates an example, non-limiting depiction of tunnel illumination detection and tunnel entrance or exit identification in accordance with one or more embodiments described herein.

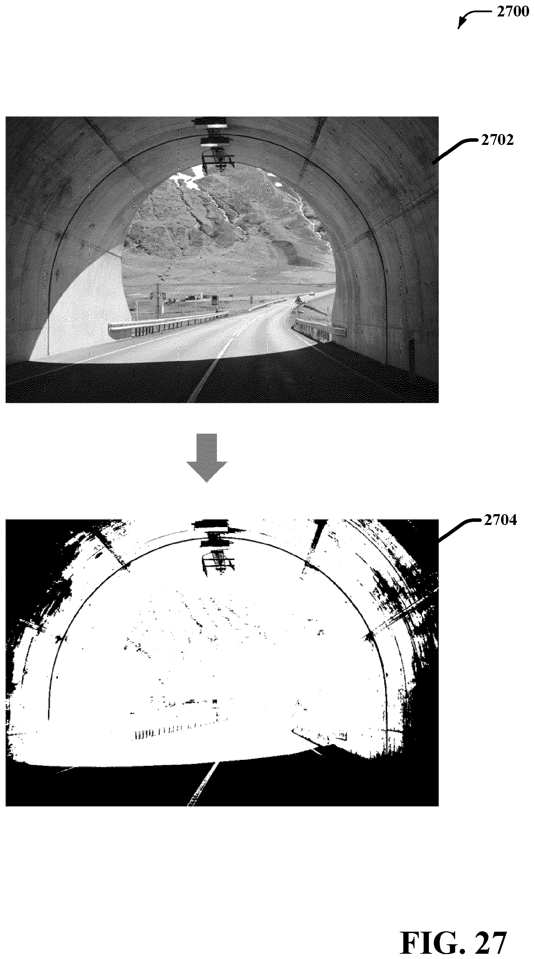

As vehicles approach a tunnel, the inside of the tunnel can appear dark, especially when entering from a bright environment. For example, image 2602 depicts entering of a tunnel from daylight, wherein the tunnel entrance appears to be dark. Furthermore, the inside of a tunnel, shown by image 2604, can be poorly lit. In such situations, it may be challenging for a driver's eyes to adjust to drastic light changes. Therefore, the recognition component 108 can detect the drastic light change from the tunnel and engage the analysis component 110 to perform a risk assessment. Now referencing FIG. 27, similarly, a risk assessment can be performed when a vehicle exits a tunnel, as depicted in image 2702. However, the drastic light change involves adapting to bright light from dark lighting conditions inside the tunnel. An example of the drastic light change that occurs when exiting a tunnel can be shown by image 2704.

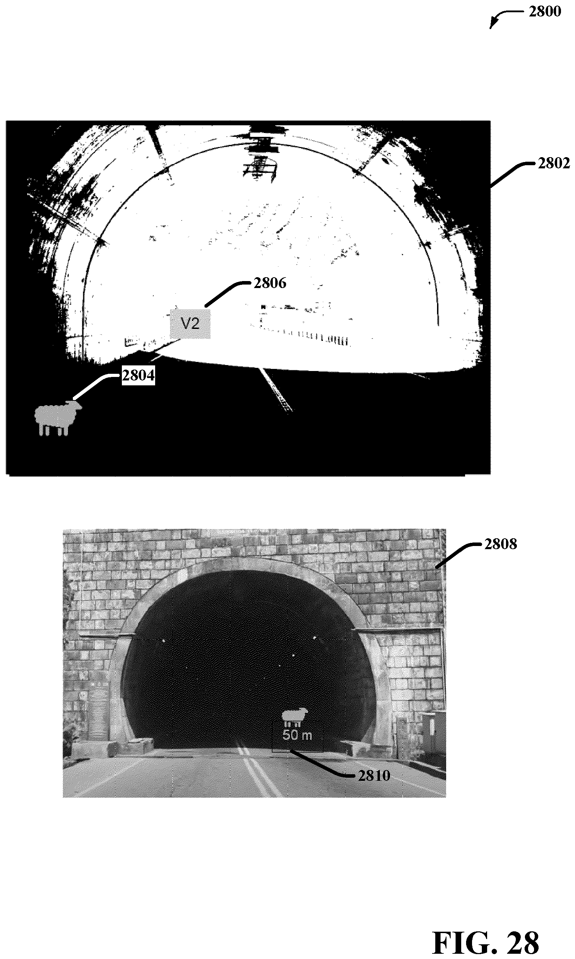

Now turning to FIG. 28, once a vehicle enters or exits a tunnel and experiences a drastic light change, the identification component 106 can perform object detection. The recognition component 108 can then determine if detected objects are visible to approaching vehicles. For example, image 2802 can be from the perspective of a vehicle as it exits a tunnel. Identification component 106 can detect object 2804 (e.g., an animal) located in the tunnel. The identification component can further detect an approaching vehicle 2806 that is entering the tunnel as the other vehicle exits the tunnel. As shown, object 2804 is located outside the identified illuminated area that is caused by the daylight shining through the exit of the tunnel. Therefore, the analysis component 110 can perform a risk assessment on object 2804 to determine an associated risk level. In response to a determination that object 2804 is risky or very risky, the execution component 202 can transmit an electronic notification to vehicle 2806 or perform any set of suitable actions to avoid collisions (e.g., reduce speed of the exiting vehicle, utilize dynamic bend lighting, activate high beam lights on vehicle 2806). Image 2808 depicts the perspective of the entering vehicle 2806. In various cases, the received notification 2810 can display (e.g., on a heads-up display) an icon indicating where object 2804 is located and the distance from the object 2804. Vehicle 2806 can receive the notification before entering the tunnel to allow vehicle 2804 to take appropriate precautions upon entering the tunnel.

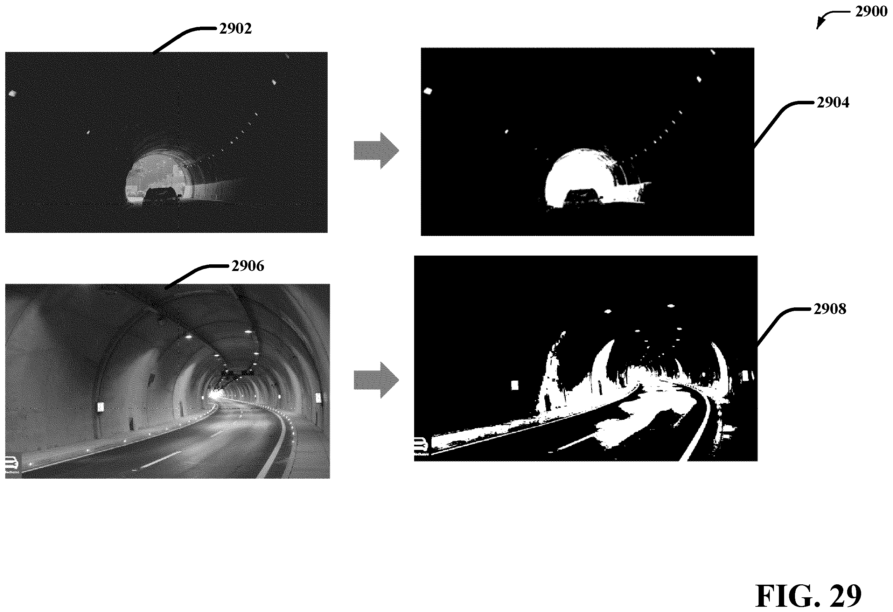

FIG. 29 illustrates an example, non-limiting depiction of light detection in a tunnel in accordance with one or more embodiments described herein.

In various embodiments, the recognition component 108 can detect other light sources within a tunnel. Thus, the context component 112 can determine if light conditions within the tunnel meet the defined threshold for darkness (e.g., tunnel is too dark to drive safely, tunnel has poor lighting, tunnel lights are not properly functioning). In response to a determination that light conditions within the tunnel meet the defined threshold for darkness, the identification component 106 can perform object detection. Therefore, the vehicle can aid visibility and awareness of other vehicles in the tunnel similarly to how the methods described herein function outside in nighttime conditions (e.g., determine an illuminated area, perform a risk assessment, determine a risk level, execute safety actions).

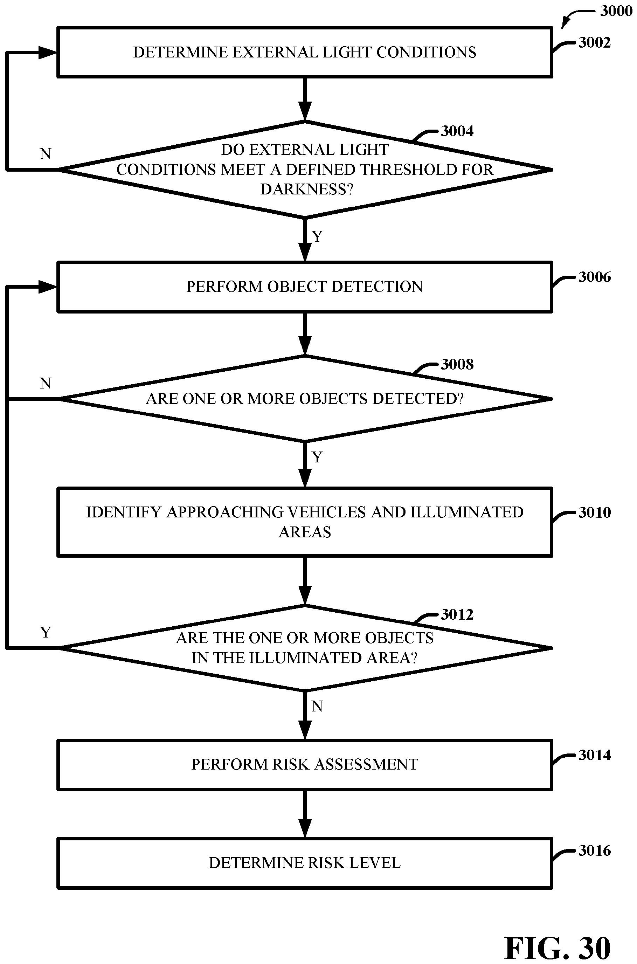

FIG. 30 illustrates a flow diagram of an example, non-limiting computer-implemented method 3000 that can facilitate object detection in darkness for vehicle operation in accordance with one or more embodiments described herein. In various cases, the system 100 can facilitate the computer-implemented method 3000.

In various embodiments, act 3002 can include determining, by the context component (e.g., via 112), external light conditions.

In various cases, act 3004 can include determining, by the context component (e.g., via 112), whether external light conditions meet a defined threshold for darkness. If not (e.g., if external light conditions do not meet the defined threshold for darkness), the computer-implemented method 3000 can proceed to act 3002. If so (e.g., if external light conditions meet the defined threshold for darkness), the computer-implemented method 3000 can proceed to act 3006.

In various aspects, act 3006 can include performing, by the identification component (e.g., via 106) object detection.

In various cases, act 3008 can include determining, by the identification component (e.g., via 106), whether one or more objects are detected. If not (e.g., if one or more objects are not detected), the computer-implemented method 3000 can proceed to act 3006. If so (e.g., if one or more objects are not detected), the computer-implemented method 3000 can proceed to act 3010.

In various aspects, act 3010 can include identifying, by the recognition component (e.g., via 108) approaching vehicle and illuminated areas.

In various cases, act 3012 can include determining, by the recognition component (e.g., via 108), whether the one or more objects are in the illuminated area. If not (e.g., if the one or more objects are not in the illuminated area), the computer-implemented method 3000 can proceed to act 3014. If so (e.g., if the one or more objects are in the illuminated area), the computer-implemented method 3000 can proceed to act 3006.

In various aspects, act 3010 can include performing, by the analysis component (e.g., via 110) a risk assessment.

In various aspects, act 3010 can include determining, by the analysis component (e.g., via 110) a risk level.

Although the herein disclosure mainly describes various embodiments as implementing deep learning neural networks (e.g., 602), this is a mere non-limiting example. In various aspects, the herein-described teachings can be implemented via any suitable machine learning models exhibiting any suitable artificial intelligence architectures (e.g., support vector machines, naive Bayes, linear regression, logistic regression, decision trees, random forest, reinforcement learning) or quantum computing architectures.

In various instances, machine learning algorithms or models can be implemented in any suitable way to facilitate any suitable aspects described herein. To facilitate some of the above-described machine learning aspects of various embodiments, consider the following discussion of artificial intelligence (AI). Various embodiments described herein can employ artificial intelligence to facilitate automating one or more features or functionalities. The components can employ various AI-based schemes for carrying out various embodiments/examples disclosed herein. In order to provide for or aid in the numerous determinations (e.g., determine, ascertain, infer, calculate, predict, prognose, estimate, derive, forecast, detect, compute) described herein, components described herein can examine the entirety or a subset of the data to which it is granted access and can provide for reasoning about or determine states of the system or environment from a set of observations as captured via events or data. Determinations can be employed to identify a specific context or action, or can generate a probability distribution over states, for example. The determinations can be probabilistic; that is, the computation of a probability distribution over states of interest based on a consideration of data and events. Determinations can also refer to techniques employed for composing higher-level events from a set of events or data.

Such determinations can result in the construction of new events or actions from a set of observed events or stored event data, whether or not the events are correlated in close temporal proximity, and whether the events and data come from one or several event and data sources. Components disclosed herein can employ various classification (explicitly trained (e.g., via training data) as well as implicitly trained (e.g., via observing behavior, preferences, historical information, receiving extrinsic information, and so on)) schemes or systems (e.g., support vector machines, neural networks, expert systems, Bayesian belief networks, fuzzy logic, data fusion engines, and so on) in connection with performing automatic or determined action in connection with the claimed subject matter. Thus, classification schemes or systems can be used to automatically learn and perform a number of functions, actions, or determinations.

A classifier can map an input attribute vector, z = (z₁, z₂, z₃, z₄, *zₙ*), to a confidence that the input belongs to a class, as by f(z) = *confidence*(*class*). Such classification can employ a probabilistic or statistical-based analysis (e.g., factoring into the analysis utilities and costs) to determinate an action to be automatically performed. A support vector machine (SVM) can be an example of a classifier that can be employed. The SVM operates by finding a hyper-surface in the space of possible inputs, where the hyper-surface attempts to split the triggering criteria from the non-triggering events. Intuitively, this makes the classification correct for testing data that is near, but not identical to training data. Other directed and undirected model classification approaches include, e.g., naive Bayes, Bayesian networks, decision trees, neural networks, fuzzy logic models, or probabilistic classification models providing different patterns of independence, any of which can be employed. Classification as used herein also is inclusive of statistical regression that is utilized to develop models of priority.

The herein disclosure describes non-limiting examples. For ease of description or explanation, various portions of the herein disclosure utilize the term "each," "every," or "all" when discussing various examples. Such usages of the term "each," "every," or "all" are non-limiting. In other words, when the herein disclosure provides a description that is applied to "each," "every," or "all" of some particular object or component, it should be understood that this is a non-limiting example, and it should be further understood that, in various other examples, it can be the case that such description applies to fewer than "each," "every," or "all" of that particular object or component.

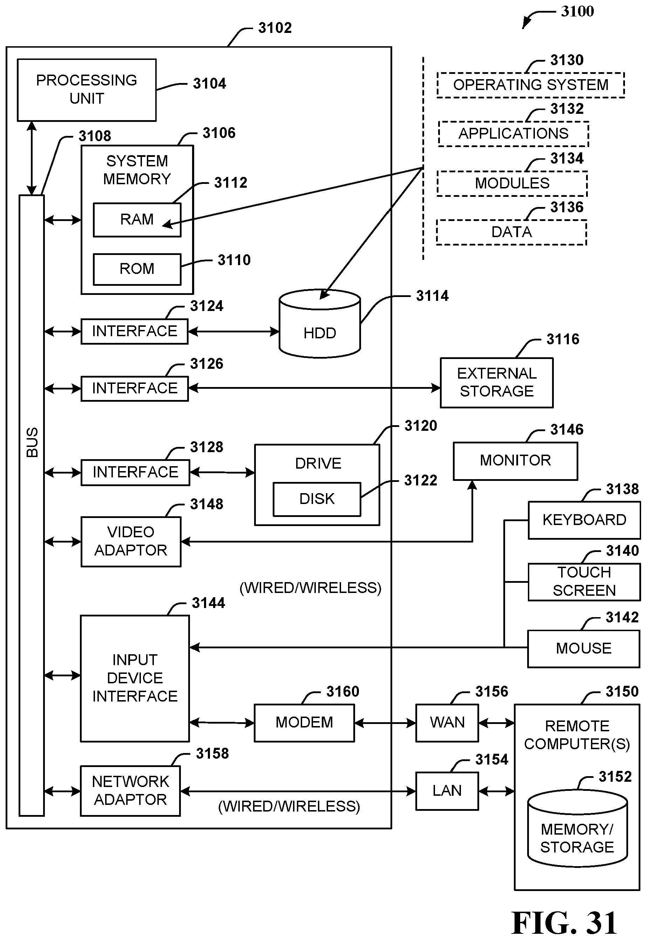

In order to provide additional context for various embodiments described herein, FIG. 31 and the following discussion are intended to provide a brief, general description of a suitable computing environment 3100 in which the various embodiments of the embodiment described herein can be implemented. While the embodiments have been described above in the general context of computer-executable instructions that can run on one or more computers, those skilled in the art will recognize that the embodiments can be also implemented in combination with other program modules or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multi-processor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can include, but are not limited to, quantum memories, or other tangible or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 31, the example environment 3100 for implementing various embodiments of the aspects described herein includes a computer 3102, the computer 3102 including a processing unit 3104, a system memory 3106 and a system bus 3108. The system bus 3108 couples system components including, but not limited to, the system memory 3106 to the processing unit 3104. The processing unit 3104 can be any of various commercially available processors. Dual microprocessors and other multi-processor architectures can also be employed as the processing unit 3104.

The system bus 3108 can be any of several types of bus structure that can further interconnect to a memory bus (with or without a memory controller), a peripheral bus, and a local bus using any of a variety of commercially available bus architectures. The system memory 3106 includes ROM 3110 and RAM 3112. A basic input/output system (BIOS) can be stored in a non-volatile memory such as ROM, erasable programmable read only memory (EPROM), EEPROM, which BIOS contains the basic routines that help to transfer information between elements within the computer 3102, such as during startup. The RAM 3112 can also include a high-speed RAM such as static RAM for caching data.

The computer 3102 further includes an internal hard disk drive (HDD) 3114 (e.g., EIDE, SATA), one or more external storage devices 3116 (e.g., a magnetic floppy disk drive (FDD) 3116, a memory stick or flash drive reader, a memory card reader, etc.) and a drive 3120, e.g., such as a solid state drive, an optical disk drive, which can read or write from a disk 3122, such as a CD-ROM disc, a DVD, a BD, etc. Alternatively, where a solid state drive is involved, disk 3122 would not be included, unless separate. While the internal HDD 3114 is illustrated as located within the computer 3102, the internal HDD 3114 can also be configured for external use in a suitable chassis (not shown). Additionally, while not shown in environment 3100, a solid state drive (SSD) could be used in addition to, or in place of, an HDD 3114. The HDD 3114, external storage device(s) 3116 and drive 3120 can be connected to the system bus 3108 by an HDD interface 3124, an external storage interface 3126 and a drive interface 3128, respectively. The interface 3124 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 3102, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 3112, including an operating system 3130, one or more application programs 3132, other program modules 3134 and program data 3136. All or portions of the operating system, applications, modules, or data can also be cached in the RAM 3112. The systems and methods described herein can be implemented utilizing various commercially available operating systems or combinations of operating systems.

Computer 3102 can optionally comprise emulation technologies. For example, a hypervisor (not shown) or other intermediary can emulate a hardware environment for operating system 3130, and the emulated hardware can optionally be different from the hardware illustrated in FIG. 31. In such an embodiment, operating system 3130 can comprise one virtual machine (VM) of multiple VMs hosted at computer 3102. Furthermore, operating system 3130 can provide runtime environments, such as the Java runtime environment or the .NET framework, for applications 3132. Runtime environments are consistent execution environments that allow applications 3132 to run on any operating system that includes the runtime environment. Similarly, operating system 3130 can support containers, and applications 3132 can be in the form of containers, which are lightweight, standalone, executable packages of software that include, e.g., code, runtime, system tools, system libraries and settings for an application.

Further, computer 3102 can be enable with a security module, such as a trusted processing module (TPM). For instance with a TPM, boot components hash next in time boot components, and wait for a match of results to secured values, before loading a next boot component. This process can take place at any layer in the code execution stack of computer 3102, e.g., applied at the application execution level or at the operating system (OS) kernel level, thereby enabling security at any level of code execution.

A user can enter commands and information into the computer 3102 through one or more wired/wireless input devices, e.g., a keyboard 3138, a touch screen 3140, and a pointing device, such as a mouse 3142. Other input devices (not shown) can include a microphone, an infrared (IR) remote control, a radio frequency (RF) remote control, or other remote control, a joystick, a virtual reality controller or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 3104 through an input device interface 3144 that can be coupled to the system bus 3108, but can be connected by other interfaces, such as a parallel port, an IEEE 1394 serial port, a game port, a USB port, an IR interface, a BLUETOOTH^{®} interface, etc.

A monitor 3146 or other type of display device can be also connected to the system bus 3108 via an interface, such as a video adapter 3148. In addition to the monitor 3146, a computer typically includes other peripheral output devices (not shown), such as speakers, printers, etc.

The computer 3102 can operate in a networked environment using logical connections via wired or wireless communications to one or more remote computers, such as a remote computer(s) 3150. The remote computer(s) 3150 can be a workstation, a server computer, a router, a personal computer, portable computer, microprocessor-based entertainment appliance, a peer device or other common network node, and typically includes many or all of the elements described relative to the computer 3102, although, for purposes of brevity, only a memory/storage device 3152 is illustrated. The logical connections depicted include wired/wireless connectivity to a local area network (LAN) 3154 or larger networks, e.g., a wide area network (WAN) 3156. Such LAN and WAN networking environments are commonplace in offices and companies, and facilitate enterprise-wide computer networks, such as intranets, all of which can connect to a global communications network, e.g., the Internet.

The computer 3102 can operate in a networked environment using logical connections via wireless communications based GPRS, GSM, 5G, LTE, 6G protocols.

When used in a LAN networking environment, the computer 3102 can be connected to the local network 3154 through a wired or wireless communication network interface or adapter 3158. The adapter 3158 can facilitate wired or wireless communication to the LAN 3154, which can also include a wireless access point (AP) disposed thereon for communicating with the adapter 3158 in a wireless mode.

When used in a WAN networking environment, the computer 3102 can include a modem 3160 or can be connected to a communications server on the WAN 3156 via other means for establishing communications over the WAN 3156, such as by way of the Internet. The modem 3160, which can be internal or external and a wired or wireless device, can be connected to the system bus 3108 via the input device interface 3144. In a networked environment, program modules depicted relative to the computer 3102 or portions thereof, can be stored in the remote memory/storage device 3152. It will be appreciated that the network connections shown are example and other means of establishing a communications link between the computers can be used.

When used in either a LAN or WAN networking environment, the computer 3102 can access cloud storage systems or other network-based storage systems in addition to, or in place of, external storage devices 3116 as described above, such as but not limited to a network virtual machine providing one or more aspects of storage or processing of information. Generally, a connection between the computer 3102 and a cloud storage system can be established over a LAN 3154 or WAN 3156 e.g., by the adapter 3158 or modem 3160, respectively. Upon connecting the computer 3102 to an associated cloud storage system, the external storage interface 3126 can, with the aid of the adapter 3158 or modem 3160, manage storage provided by the cloud storage system as it would other types of external storage. For instance, the external storage interface 3126 can be configured to provide access to cloud storage sources as if those sources were physically connected to the computer 3102.

The computer 3102 can be operable to communicate with any wireless devices or entities operatively disposed in wireless communication, e.g., a printer, scanner, desktop or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

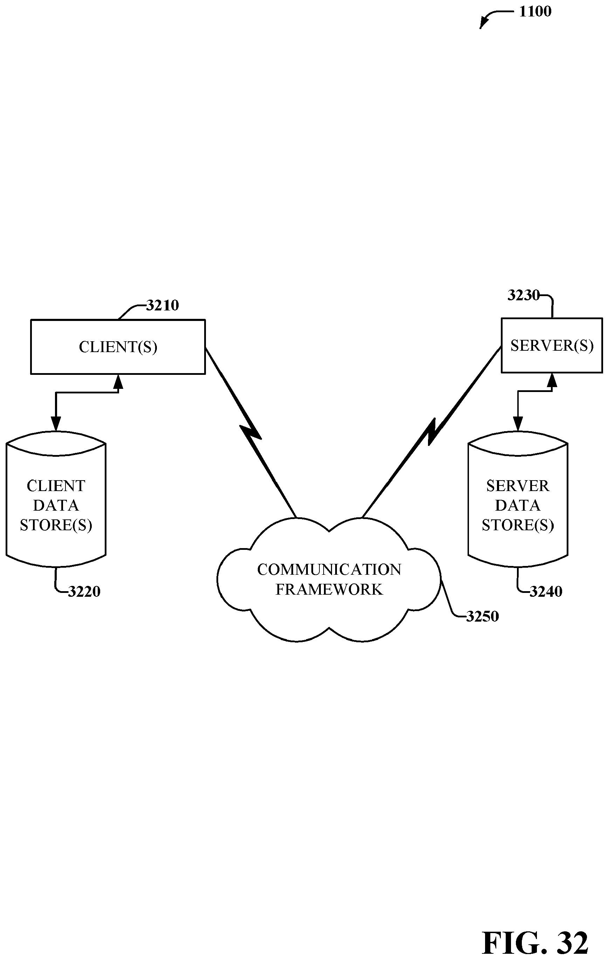

FIG. 32 is a schematic block diagram of a sample computing environment 3200 with which the disclosed subject matter can interact. The sample computing environment 3200 includes one or more client(s) 3210. The client(s) 3210 can be hardware or software (e.g., threads, processes, computing devices). The sample computing environment 3200 also includes one or more server(s) 3230. The server(s) 3230 can also be hardware or software (e.g., threads, processes, computing devices). The servers 3230 can house threads to perform transformations by employing one or more embodiments as described herein, for example. One possible communication between a client 3210 and a server 3230 can be in the form of a data packet adapted to be transmitted between two or more computer processes. The sample computing environment 3200 includes a communication framework 3250 that can be employed to facilitate communications between the client(s) 3210 and the server(s) 3230. The client(s) 3210 are operably connected to one or more client data store(s) 3220 that can be employed to store information local to the client(s) 3210. Similarly, the server(s) 3230 are operably connected to one or more server data store(s) 3240 that can be employed to store information local to the servers 3230.

The present invention may be a system, a method, an apparatus or a computer program product at any possible technical detail level of integration. The computer program product can include a computer readable storage medium (or media) having computer readable program instructions thereon for causing a processor to carry out aspects of the present invention. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network or a wireless network. The network can comprise copper transmission cables, optical transmission fibers, wireless transmission, routers, firewalls, switches, gateway computers or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the present invention can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform aspects of the present invention.

Aspects of the present invention are described herein with reference to flowchart illustrations or block diagrams of methods, apparatus (systems), and computer program products according to embodiments of the invention. It will be understood that each block of the flowchart illustrations or block diagrams, and combinations of blocks in the flowchart illustrations or block diagrams, can be implemented by computer readable program instructions. These computer readable program instructions can be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart or block diagram block or blocks. These computer readable program instructions can also be stored in a computer readable storage medium that can direct a computer, a programmable data processing apparatus, or other devices to function in a particular manner, such that the computer readable storage medium having instructions stored therein comprises an article of manufacture including instructions which implement aspects of the function/act specified in the flowchart or block diagram block or blocks. The computer readable program instructions can also be loaded onto a computer, other programmable data processing apparatus, or other device to cause a series of operational acts to be performed on the computer, other programmable apparatus or other device to produce a computer implemented process, such that the instructions which execute on the computer, other programmable apparatus, or other device implement the functions/acts specified in the flowchart or block diagram block or blocks.

The flowcharts and block diagrams in the Figures illustrate the architecture, functionality, and operation of possible implementations of systems, methods, and computer program products according to various embodiments of the present invention. In this regard, each block in the flowchart or block diagrams can represent a module, segment, or portion of instructions, which comprises one or more executable instructions for implementing the specified logical function(s). In some alternative implementations, the functions noted in the blocks can occur out of the order noted in the Figures. For example, two blocks shown in succession can, in fact, be executed substantially concurrently, or the blocks can sometimes be executed in the reverse order, depending upon the functionality involved. It will also be noted that each block of the block diagrams or flowchart illustration, and combinations of blocks in the block diagrams or flowchart illustration, can be implemented by special purpose hardware-based systems that perform the specified functions or acts or carry out combinations of special purpose hardware and computer instructions.

While the subject matter has been described above in the general context of computer-executable instructions of a computer program product that runs on a computer or computers, those skilled in the art will recognize that this disclosure also can or can be implemented in combination with other program modules. Generally, program modules include routines, programs, components, data structures, etc. that perform particular tasks or implement particular abstract data types. Moreover, those skilled in the art will appreciate that the inventive computer-implemented methods can be practiced with other computer system configurations, including single-processor or multiprocessor computer systems, mini-computing devices, mainframe computers, as well as computers, hand-held computing devices (e.g., PDA, phone), microprocessor-based or programmable consumer or industrial electronics, and the like. The illustrated aspects can also be practiced in distributed computing environments in which tasks are performed by remote processing devices that are linked through a communications network. However, some, if not all aspects of this disclosure can be practiced on stand-alone computers. In a distributed computing environment, program modules can be located in both local and remote memory storage devices.

As used in this application, the terms "component," "system," "platform," "interface," and the like, can refer to or can include a computer-related entity or an entity related to an operational machine with one or more specific functionalities. The entities disclosed herein can be either hardware, a combination of hardware and software, software, or software in execution. For example, a component can be, but is not limited to being, a process running on a processor, a processor, an object, an executable, a thread of execution, a program, or a computer. By way of illustration, both an application running on a server and the server can be a component. One or more components can reside within a process or thread of execution and a component can be localized on one computer or distributed between two or more computers. In another example, respective components can execute from various computer readable media having various data structures stored thereon. The components can communicate via local or remote processes such as in accordance with a signal having one or more data packets (e.g., data from one component interacting with another component in a local system, distributed system, or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. As used herein, the term "and/or" is intended to have the same meaning as "or." Moreover, articles "a" and "an" as used in the subject specification and annexed drawings should generally be construed to mean "one or more" unless specified otherwise or clear from context to be directed to a singular form. As used herein, the terms "example" or "exemplary" are utilized to mean serving as an example, instance, or illustration. For the avoidance of doubt, the subject matter disclosed herein is not limited by such examples. In addition, any aspect or design described herein as an "example" or "exemplary" is not necessarily to be construed as preferred or advantageous over other aspects or designs, nor is it meant to preclude equivalent exemplary structures and techniques known to those of ordinary skill in the art.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor can also be implemented as a combination of computing processing units. In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory or memory components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

What has been described above include mere examples of systems and computer-implemented methods. It is, of course, not possible to describe every conceivable combination of components or computer-implemented methods for purposes of describing this disclosure, but many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

The descriptions of the various embodiments have been presented for purposes of illustration, but are not intended to be exhaustive or limited to the embodiments disclosed. Many modifications and variations will be apparent without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

Various non-limiting aspects of various embodiments described herein are presented in the following clauses.

Clause 1: A system, comprising: a processor that executes computer-executable components stored in a non-transitory computer-readable memory, the computer-executable components comprising: an identification component that detects one or more objects on or alongside a road; a recognition component that detects light from an approaching vehicle to determine an illuminated area, and determines if the one or more objects are located in the illuminated area; and an analysis component that performs, in response to a determination that the one or more objects are not located in the illuminated area, a risk assessment on the one or more objects based on parameters of the one or more objects.

Clause 2: The system of any preceding clause, wherein the parameters of the one or more objects comprise object type, movement, ability to move, or location.

Clause 3: The system of any preceding clause, wherein the analysis component determines a risk level of the one or more objects based on the risk assessment.

Clause 4: The system of any preceding clause, wherein the risk assessment determines the risk level of the one or more objects based on GPS data, light pollution maps, time of day, season, latitude, speed of the vehicle, type of the vehicle, road conditions, or environment conditions.

Clause 5: The system of any preceding clause, wherein the recognition component identifies other light sources, and determines if the one or more objects are located in the other light sources.

Clause 6: The system of any preceding clause, further comprising an execution component that changes light intensity of headlights on the approaching vehicle in response to a determination of the risk level of the one or more objects.

Clause 7: The system of any preceding clause, wherein the execution component changes headlight angles on the approaching vehicle based on location of the one or more objects.

Clause 8: The system of any preceding clause, wherein the execution component transmits, in response to a determination of the risk level of the one or more objects, an electronic notification to the approaching vehicle or other vehicles within a defined range.

Clause 9: The system of any preceding clause, further comprising a context component that determines if external light conditions meet a defined threshold of darkness.

Clause 10: The system of any preceding clause, wherein the execution component performs a lane change, increases speed, or decreases speed of the vehicle in response to a determination of the risk level of the one or more objects.

Clause 11: The system of any preceding clause, wherein the recognition component identifies an entrance or exit of a tunnel, and wherein the context component determines if light conditions in the tunnel meet the defined threshold of darkness.

Clause 12: The system of any preceding clause, wherein the execution component activates hazard lights on the approaching vehicle in response to a determination of the risk level of the one or more objects.

In various cases, any suitable combination or combinations of clauses 1-12 can be implemented.

Clause 13: A computer-implemented method, comprising: detecting one or more objects on or alongside a road; detecting light from an approaching vehicle to determine an illuminated area, and determining if the one or more objects are located in the illuminated area; and performing, in response to a determination that the one or more objects are not located in the illuminated area, a risk assessment on the one or more objects based on parameters of the one or more objects.

Clause 14: The computer-implemented method of any preceding clause, further comprising determining a risk level of the one or more objects based on the risk assessment.

Clause 15: The computer-implemented method of any preceding clause, further comprising determining the risk level of the one or more objects based on GPS data, light pollution maps, time of day, season, latitude, speed of the vehicle, type of the vehicle, road conditions, or environment conditions.

Clause 16: The computer-implemented method of any preceding clause, further comprising transmitting, in response to a determination of the risk level of the one or more objects, an electronic notification to the approaching vehicle or other vehicles within a defined range.

Clause 17: The computer-implemented method of any preceding clause, further comprising changing light intensity of headlights on the approaching vehicle in response to a determination of the risk level of the one or more objects.

Clause 18: The computer-implemented method of any preceding clause, further comprising changing headlight angles on the approaching vehicle based on location of the one or more objects.

In various cases, any suitable combination or combinations of clauses 13-18 can be implemented.

Clause 19: A computer program product comprising a non-transitory computer-readable memory having program instructions embodied therewith, the program instructions executable by a processor to cause the processor to: detect one or more objects on or alongside a road; detect light from an approaching vehicle to determine an illuminated area, and determine if the one or more objects are located in the illuminated area; and perform, in response to a determination that the one or more objects are not located in the illuminated area, a risk assessment on the one or more objects based on parameters of the one or more objects.

Clause 20: The computer program product of any preceding clause, wherein the program instructions are further executable to cause the processor to: determine if external light conditions meet a defined threshold of darkness.

In various cases, any suitable combination or combinations of clauses 19-20 can be implemented.

In various cases, any suitable combination or combinations of clauses 1-20 can be implemented.

## Claims

1. A system, comprising:
a processor that executes computer-executable components stored in a non-transitory computer-readable memory, the computer-executable components comprising:
an identification component that detects one or more objects on or alongside a road;
a recognition component that detects light from an approaching vehicle to determine an illuminated area, and determines if the one or more objects are located in the illuminated area; and
an analysis component that performs, in response to a determination that the one or more objects are not located in the illuminated area, a risk assessment on the one or more objects based on parameters of the one or more objects.

2. The system of claim 1, wherein the parameters of the one or more objects comprise object type, movement, ability to move, or location.

3. The system of any of the preceding claims, wherein the analysis component determines a risk level of the one or more objects based on the risk assessment.

4. The system of claim 3, wherein the risk assessment determines the risk level of the one or more objects based on GPS data, light pollution maps, time of day, season, latitude, speed of the vehicle, type of the vehicle, road conditions, or environment conditions.

5. The system of any of the preceding claims, wherein the recognition component identifies other light sources, and determines if the one or more objects are located in the other light sources.

6. The system of claim 3, further comprising an execution component that changes light intensity of headlights on the approaching vehicle in response to a determination of the risk level of the one or more objects.

7. The system of claim 6, wherein the execution component changes headlight angles on the approaching vehicle based on location of the one or more objects, and/or wherein the execution component transmits, in response to a determination of the risk level of the one or more objects, an electronic notification to the approaching vehicle or other vehicles within a defined range.

8. The system of any of the preceding claims, further comprising a context component that determines if external light conditions meet a defined threshold of darkness, preferably wherein the recognition component identifies an entrance or exit of a tunnel, and wherein the context component determines if light conditions in the tunnel meet the defined threshold of darkness.

9. The system of claim 6, wherein the execution component performs a lane change, increases speed, or decreases speed of the vehicle in response to a determination of the risk level of the one or more objects, and/or wherein the execution component activates hazard lights on the approaching vehicle in response to a determination of the risk level of the one or more objects.

10. A computer-implemented method, comprising:
detecting one or more objects on or alongside a road;
detecting light from an approaching vehicle to determine an illuminated area, and
determining if the one or more objects are located in the illuminated area; and
performing, in response to a determination that the one or more objects are not located in the illuminated area, a risk assessment on the one or more objects based on parameters of the one or more objects.

11. The computer-implemented method of claim 10, further comprising determining a risk level of the one or more objects based on the risk assessment.

12. The computer-implemented method of claim 11, further comprising determining the risk level of the one or more objects based on GPS data, light pollution maps, time of day, season, latitude, speed of the vehicle, type of the vehicle, road conditions, or environment conditions.

13. The computer-implemented method of claim 11, further comprising transmitting, in response to a determination of the risk level of the one or more objects, an electronic notification to the approaching vehicle or other vehicles within a defined range.

14. The computer-implemented method of claim 11, further comprising changing light intensity of headlights on the approaching vehicle in response to a determination of the risk level of the one or more objects.

15. The computer-implemented method of claim 11, further comprising changing headlight angles on the approaching vehicle based on location of the one or more objects.
